# EUROPÄISCHE PATENTANMELDUNG

(11) **EP 4 075 238 A1**
(43) Veröffentlichungstag der Anmeldung: **19.10.2022**
(21) Anmeldenummer: 21168189.5
(22) Anmeldetag: 13.04.2021
(51) Int. Cl.: G06F 3/01, G06T 19/00, G01S 19/01

(54) **VERFAHREN UND SYSTEM ZUR ERMÖGLICHUNG EINER NAVIGATION UNTER VERWENDUNG GLOBALER NAVIGATIONSSATELLITENSYSTEME UND AUGMENTED REALITY CLOUD-RAUMANKER**

(71) Anmelder: Novatec Consulting GmbH, 70771 Leinfelden-Echterdingen (DE)
(72) Erfinder: Grundler, Jonas, 70771 Leinfelden-Echterdingen (DE); Ferreira da Silva, Paulo, 70771 Leinfelden-Echterdingen (DE); Schmid, Florian, 70771 Leinfelden-Echterdingen (DE); Weinert, Benjamin, 70771 Leinfelden-Echterdingen (DE)
(74) Vertreter: Rüger Abel Patentanwälte PartGmbB

(57) **Zusammenfassung**

Es sind ein Verfahren und System zur Ermöglichung einer Navigation unter Verwendung eines globalen Navigationssatellitensystems (GNSS) und Cloud-Raumanker beschrieben. Das Verfahren und System sind eingerichtet, um ein mobiles Benutzer-Endgerät (408) mittels GNSS zu einem festgelegten Ziel zu navigieren, zu überwachen, ob das mobile Benutzer-Endgerät (408) in eine vordefinierte Transitionszone (503, 702) eintritt, die um einen vordefinierten auswählbaren Übergangspunkt (501, 701) festgelegt ist, und bei Erkennung, dass das mobile Benutzer-Endgerät (408) in die vordefinierte Transitionszone (503, 702) eintritt, eine Navigation des mobilen Benutzer-Endgerätes (408) zu dem Ziel mittels Cloud-Raumanker (201, 705) zu initiieren. Das Verfahren und System ermöglichen einen fließenden Übergang zwischen der Navigation mittels GNSS und der Navigation mittels Cloud-Raumanker. Das Verfahren und System können ferner die Erstellung eines Graphen (504) anhand von bidirektionalen Verbindungen (202, 204) zwischen Cloud-Raumankern (201, 705) zur Navigation entlang des kürzesten Pfades und eine Prozedur zur automatischen Erneuerung von Cloud-Raumankern umfassen, um eine zuverlässige Navigation mittels Cloud-Raumanker auch in wechselhaften Umgebungen, auch im Freien, zu ermöglichen.

## Beschreibung

### TECHNISCHES GEBIET

Die vorliegende Erfindung betrifft allgemein Navigationssysteme und -verfahren und insbesondere ein Verfahren und System zur Ermöglichung einer Navigation unter Verwendung globaler Navigationssatellitensysteme und Augmented Reality Cloud-Raumanker.

### HINTERGRUND

Augmented Reality (AR; deutsch "Erweiterte Realität") definiert eine Technologie, welche die Realität ihres Benutzers und damit dessen Umgebung um virtuelle Inhalte anreichert. Bei diesen Inhalten handelt es sich entweder um neu generierte 3D-Objekte oder um virtuelle Informationen, die Bezug zur Umgebung sowie zu bestehenden Objekten und Strukturen nehmen und damit im Kontext dazu stehen. AR kann somit als eine Technologie beschrieben werden, die die Wahrnehmung ihres Benutzers mit virtuellen Informationen anreichert, die er mit seinen menschlichen Sinnen normalerweise nicht wahrnehmen könnte. Die generierten Informationen können dem Benutzer über alle menschlichen Sinne zur visuellen, akustischen, taktil-haptischen, olfaktorischen und/oder gustatorischen Wahrnehmung präsentiert werden. Da ein Großteil der AR-Anwendungen auf mobilen Endgeräten, wie Smartphones, Tablets oder Datenbrillen, dargestellt werden, bezieht sich die vorliegende Erfindung vor allem, jedoch nicht ausschließlich auf AR im Rahmen von visuell und akustisch wahrnehmbaren virtuellen Inhalten.

Zur Darstellung der virtuellen Inhalte im Kontext mit der Umgebung werden moderne Computersysteme, Sensoren, Kameras sowie Algorithmen benötigt. Diese wirken innerhalb der Endgeräte so miteinander, dass markante Punkte, Kanten, Flächen und Lichtverhältnisse der realen Welt erkannt und erfasst sowie die Position und Rotation des Endgerätes verfolgt werden. Mit Hilfe dieser Informationen ist man innerhalb einer AR-Anwendung in der Lage, einen 3D-Koordinatenraum der realen Welt zu erstellen. In diesem ist es u.a. möglich, virtuelle Inhalte an einer beliebigen Position zu platzieren und zu verankern, so dass diese auch bei Bewegungen des Benutzers an einem festen Ort im realen Raum stehen bleiben. Hierfür werden die Positionen der Kamera, also die des Endgerätes, sowie die der virtuellen Inhalte in dem 3D-Koordinatenraum für jedes aufgenommene Bild aktualisiert. Zur Darstellung werden die virtuellen Inhalte visuell über das Kamerabild gelegt und gemeinsam mit der realen Welt auf dem Display der Endgeräte dem Benutzer angezeigt.

Zur Verankerung der virtuellen Inhalte ist die Erstellung sogenannter AR-Anker (lokaler Raumanker) notwendig, welche innerhalb einer AR-Anwendung dafür sorgen, dass ein virtuelles Element an ein reales Bild, Objekt, Gesicht oder auf einer Fläche fixiert (verankert) wird. Bei der Platzierung von lokalen Raumankern wird die Position und Orientierung eines bestimmten Punktes im Raum relativ zum 3D-Koordinatenraum gespeichert. Dieser Punkt stellt einen lokalen Raumanker dar, verfügt über ein eigenes Koordinatensystem und erlaubt damit die Fixierung bzw. Verankerung von virtuellen Inhalten relativ zur Position dieses Punktes. Die Verankerung bleibt allerdings nur lokal und während der Laufzeit der Anwendung bestehen, was zur Folge hat, dass sie nach einem Neustart erneut erstellt werden muss und die daran fixierten Inhalte nicht für mehrere Benutzer bzw. Endgeräte sichtbar sind.

Damit die in der realen Welt verankerten virtuellen Inhalte persistent an der gleichen Position im Raum bleiben und damit für mehrere Benutzer sichtbar und nutzbar sind, können innerhalb einer AR-Anwendung statt lokaler Raumanker Cloud-Raumanker eingesetzt werden.

Bei der Erstellung von Cloud-Raumankern werden markante und kontrastreiche Punkte der Umgebung, wie Ecken, Kanten, Flächen und Objektmerkmale, im Sichtfeld der Kamera identifiziert und in Beziehung zueinander gesetzt. Daraus entsteht eine einzigartige Punktwolke mit einer dreidimensionalen Konstellation aus Umgebungspunkten. Innerhalb dieser Punktwolke kann ein bestimmter Punkt, relativ zu der dreidimensionalen Konstellation der Umgebungspunkte, als Ankerpunkt definiert werden. Der Ankerpunkt verfügt über ein eigenes Koordinatensystem, in dem virtuelle Inhalte verankert bzw. fixiert werden können. Damit die virtuellen Inhalte auch nach dem Beenden der Laufzeit bzw. Sitzung, in welcher der Cloud-Raumanker platziert wurde, am gleichen Ort und von mehreren Benutzern auf verschiedenen Endgeräten angezeigt werden können, werden die Punktwolke, der darin befindliche Ankerpunkt sowie dessen Identifikationsnummer in einer Cloud gespeichert.

Die virtuellen Inhalte werden lokal auf dem Endgerät gespeichert, während die Referenz, die anzeigt, welcher Inhalt welchem Cloud-Raumanker zugeordnet werden kann, in der Cloud gespeichert wird.

Zusätzlich können bei der Erstellung von Cloud-Raumankern nicht visuelle Sensorsignale, wie die eines GNSS, Wireless Local Area Network (WLAN) und/oder Bluetooth Low Energy (BLE), in den Informationen der Cloud-Raumanker hinterlegt werden, um bei der Lokalisierung bzw. Detektion der Cloud-Raumanker zu helfen.

Sollen nun in einer neuen Sitzung der AR-Anwendung bzw. von einem anderen Benutzer die virtuellen Inhalte wieder an der ursprünglich definierten Stelle, in der realen Welt angezeigt werden, müssen von der Kamera bzw. der AR-Anwendung erneut markante und kontrastreiche Punkte der Umgebung identifiziert und in Beziehung zueinander gesetzt werden. Die daraus entstandene Punktwolke wird erneut in die Cloud geladen und dort durch einen Cloud-Raumanker-Dienst mit bereits gespeicherten Punktwolken abgeglichen. Wenn dabei festgestellt wird, dass die miteinander verglichenen Punktwolken große Ähnlichkeit haben, erscheint der früher erstellte Cloud-Raumanker erneut an derselben Position in der realen Welt.

Zur selben Zeit wird abgefragt, welche auf dem Endgerät gespeicherten virtuellen Inhalte dem Cloud-Raumanker zugeordnet wurden, woraufhin die Inhalte wieder am ursprünglich definierten Ort in der realen Welt angezeigt werden.

Das Persistieren der virtuellen Inhalte in der realen Welt mit Hilfe von Cloud-Raumankern ermöglicht bspw. die Entwicklung von plattformübergreifenden Mehrbenutzer-Anwendungen oder von Wegleit- bzw. Navigationssystemen.

Damit mit Hilfe von Cloud-Raumankern ein Navigationssystem realisiert oder ergänzt werden kann, ist es erforderlich, einen oder mehrere Cloud-Raumanker zu platzieren und zu speichern. Diese werden vom Cloud-Raumanker-Dienst bestehender Anbieter in Verbindung gesetzt, so dass nach dem Finden eines Cloud-Raumankers alle anderen Cloud-Raumanker, die mit diesem in Verbindung stehen, ebenfalls gefunden werden.

Eine Verbindung zwischen mehreren Cloud-Raumankern wird hergestellt, indem die Bewegungen des Benutzers nach dem Platzieren eines Cloud-Raumankers bis zum Platzieren des nächsten Cloud-Raumankers verfolgt werden, so dass der Cloud-Raumanker-Dienst die Strecke erfassen und eine räumliche Beziehung zwischen den erstellten Cloud-Raumanker herstellen kann. Eine derartige Verbindung kann auch über mehrere Sitzungen hinweg aufgebaut werden.

Wenn mehrere Cloud-Raumanker aufgrund deren Verbindung zueinander detektiert bzw. lokalisiert wurden, ist es möglich sich die Richtung zu einem beliebigen Cloud-Raumanker anzeigen zulassen.

Die Anwendung von Cloud-Raumankern für Navigationssysteme und -verfahren ist prinzipiell sowohl außerhalb als auch innerhalb von Gebäuden möglich.

Die Nutzung von Cloud-Raumankern für die Entwicklung einer Navigationslösung, die ihre Benutzer sowohl innerhalb als auch außerhalb von Gebäuden um Hindernisse herum zum gewünschten Ziel führt, kann jedoch derzeit durch herkömmliche Systeme nicht abgedeckt werden. Dies liegt zum einen daran, dass die herkömmlichen Systeme bislang nur die Möglichkeit bieten, ein Navigationssystem ausschließlich zur Cloud-Raumanker-Navigation zu entwickeln, zum anderen sind sie in hohem Maße von einem konstanten Umgebungsumfeld abhängig. Letzteres bedeutet, dass eine Veränderung der Umgebung, welche bspw. durch sich verändernde Wetterverhältnisse hervorgerufen wird, die Detektion von Cloud-Raumankern verhindern oder zumindest stark erschweren könnte. So sind sowohl die Erstellung als auch die Detektion von Cloud-Raumankern an Momentaufnahmen von markanten und kontrastreichen Punkten in der realen Welt gebunden. Wird bspw. angestrebt, eine Navigationslösung außerhalb von Gebäuden zu erstellen, kann das für die Navigation notwendige Wiederauffinden von Cloud-Raumankern an den sich ändernden Wetterverhältnissen scheitern.

Darüber hinaus ist eine Navigation mit Hilfe von Cloud-Raumankern außerhalb von Gebäuden, bei welcher relativ große Strecken zurückgelegt werden sollen, nicht im Sinne der Benutzer. Hierzu müssten die Benutzer das Endgerät mit der korrespondierenden Navigationsanwendung während des gesamten Navigationsvorgangs vor sich halten, so dass die Anwendung mit Hilfe der Kamera die Umgebung erfassen und verwerten kann.

Für eine Navigation außerhalb von Gebäuden sind im Allgemeinen Navigationslösungen mit Unterstützung durch globale Navigationssatellitensysteme (GNSS), wie bspw. das GPS (Global Positioning System) der Vereinigten Staaten von Amerika, das GLONASS der Russischen Föderation oder das Galileo-System der Europäischen Union, besser geeignet. Allerdings findet die Anwendung dieser Systeme zur Navigation dort Grenzen, wo ein Empfang von GNNS-Satellitensignalen nicht möglich oder zumindest stark beeinträchtigt ist, wie bspw. im Innern von Gebäuden.

Es besteht aber ein Bedarf nach Lösungen, die eine Navigation sowohl außerhalb als auch innerhalb von Gebäuden sowie einen reibungslosen Übergang zwischen diesen Navigationsarten ermöglichen. Derartige Lösungen könnten den Benutzern ermöglichen, bspw. zu einem Museum, einer Kunstgalerie, einem Amtsgebäude oder einem sonstigen interessierenden Gebäude geführt und nahtlos auch im Innern des Museums, der Kunstgalerie, des Amts- oder sonstigen Gebäudes navigiert zu werden.

WO 2020/171908 A1 beschreibt ein System und Verfahren zur Ermöglichung einer Navigation mittels Cloud-Raumanker. Das System und Verfahren sind eingerichtet, um mittels einer Kamera erste Bilddaten zu erfassen, die einen ersten Ort der physischen Welt abbilden, eine erste räumliche Darstellung des ersten Ortes der physischen Welt basierend auf den ersten Bilddaten zu erstellen und eine Benutzereingabe zu empfangen, die eine Pose (Position und Orientierung) eines ersten virtuellen räumlichen Ankerpunktes in Bezug auf ein Merkmal, das in den ersten Bilddaten abgebildet ist, definiert. Das System und Verfahren sind ferner eingerichtet, um die Bewegung des Benutzers zu einem zweiten Ort der physischen Welt zu verfolgen, zweite Bilddaten zu erfassen, die den zweiten Ort der physischen Welt abbilden, und eine Benutzereingabe zu empfangen, die eine Pose eines zweiten virtuellen räumlichen Ankerpunktes in Bezug auf ein Merkmal definiert, das in den zweiten Bilddaten abgebildet ist. Die Daten, die die erste räumliche Darstellung, die Pose des ersten räumlichen Ankerpunkts, die zweite räumliche Darstellung, die Pose des zweiten räumlichen Ankerpunkts und eine Positionsbeziehung zwischen dem ersten und dem zweiten räumlichen Ankerpunkt darstellen, werden an ein entferntes Computergerät, z.B. einen Webserver eines über ein Computernetzwerk zugänglichen Cloud-basierten Dienstleisters, zur Speicherung gesandt und können später zur Navigation von Benutzern auf der Basis der gespeicherten Cloud-Raumanker und Informationen genutzt werden.

US 2014 / 0 335 893 A1 beschreibt ein computergestütztes Verfahren zum Erstellen und Nutzen einer multisensorischen Standortkarte zur Unterstützung einer GPS-basierten Navigation in einem Bereich, in dem die Positionsbestimmung durch das GPS-System ungenau ist. Das Verfahren umfasst ein Empfangen mehrerer multisensorischer Datenvektoren von mehreren mobilen Geräten an mehreren Standorten innerhalb des Bereichs mit beeinträchtigter GPS-Positionsbestimmung und Standortschätzungen, die die mehreren Standorte anzeigen. Sie Standortschätzungen werden zumindest teilweise von internen Navigationssystemen der mehreren mobilen Geräte erzeugt. Das Verfahren umfasst ferner ein Berechnen einer sogenannten Standort-Fingerabdruckkarte anhand der mehreren multisensorischen Datenvektoren und der Standortschätzungen, wobei die Fingerabdruckkarte mehrere Gitterpunkte umfasst, wobei jeder Gitterpunkt einen multisensorischen Gitterpunktfingerabdruck und Gitterpunkt-Standortinformationen umfasst.

Ausgehend hiervon ist es eine Aufgabe der Erfindung, ein Verfahren und System zu schaffen, die eine Navigation sowohl außerhalb als auch innerhalb von Gebäuden sowie einen fließenden Übergang zwischen diesen Navigationsarten ermöglichen.

Eine weitere Aufgabe der Erfindung ist es, ein derartiges Verfahren und System zur Ermöglichung einer Navigation unter Verwendung eines globalen Navigationssatellitensystems und Augmented Reality Cloud-Raumanker zu schaffen, die eine Navigation mittels Cloud-Raumanker um Hindernisse herum ermöglichen.

Eine noch weitere Aufgabe der Erfindung ist es, ein derartiges Verfahren und System zur Ermöglichung einer Navigation unter Verwendung eines globalen Navigationssatellitensystems und Augmented Reality Cloud-Raumanker zu schaffen, die eine Navigation mittels Cloud-Raumanker sowohl in beständigen als auch in wechselhaften Umgebungen ermöglichen.

### KURZBESCHREIBUNG DER ERFINDUNG

Zur Lösung dieser Aufgaben sind ein Verfahren und ein System zur Ermöglichung einer Navigation unter Verwendung eines globalen Navigationssatellitensystems und Cloud-Raumanker mit den Merkmalen der unabhängigen Ansprüche 1 und 14 geschaffen. Besonders bevorzugte Ausführungsformen sind Gegenstand der abhängigen Ansprüche.

In einem ersten Aspekt der Erfindung ist ein Verfahren zur Ermöglichung einer Navigation unter Verwendung eines globalen Navigationssatellitensystems (GNSS) und Cloud-Raumanker geschaffen. Das Verfahren umfasst ein Navigieren eines mobilen Benutzer-Endgerätes mittels GNSS, Überwachen, ob das mobile Benutzer-Endgerät in eine vordefinierte Transitionszone eintritt, die um einen vordefinierten Übergangspunkt festgelegt ist, und bei Erkennung, dass das mobile Gerät in die vordefinierte Transitionszone eintritt, ein Initiieren einer Navigation des mobilen Benutzer-Endgerätes mittels Cloud-Raumanker.

Das erfindungsgemäße Verfahren kann mit Hilfe eines beliebigen mobilen Endgerätes, wie z.B. eines Smartphones, eines Tablets, Laptops, PDAs (Personal Digital Assistant), einer Datenbrille oder dgl., durchgeführt werden. Es ermöglicht eine Navigation sowohl mittels GNSS als auch mittels Augmented Reality (AR) Cloud-Raumanker und ist in der Lage, einen fließenden Übergang von einer Navigation mittels GNSS zu einer Navigation mittels Cloud-Raumanker und umgekehrt zu bewerkstelligen. Dies wird durch Vorsehen des Übergangspunktes durch die Vordefinition bzw. Vorabspeicherung der Transitionszone ermöglicht. Der Übergangspunkt kann ein in einer früheren Sitzung oder durch eine Administrator-Applikation platzierter und/oder durch den Benutzer ausgewählter Cloud-Raumankerpunkt sein, für den auch die entsprechenden Koordinaten in dem GNSS-Koordinatensystem bekannt sind. Die Transitionszone stellt eine Übergangszone für den Wechsel zwischen den Navigationsarten dar und kann ein vordefinierter Bereich mit einem von Null verschiedenen Volumen oder Flächeninhalt um den Übergangspunkt als Zentrum sein. In bevorzugten Ausführungsformen kann die Transitionszone als ein Kreis oder eine Sphäre mit einem von Null verschiedenen Radius um den Übergangspunkt als Mittelpunkt vordefiniert werden. Prinzipiell kann der Radius der Transitionszone einen beliebigen Wert annehmen. Je nach Anwendung, z.B. zu betretendem Gebäude, kann der Radius der Transitionszone also bspw. 2-10 Meter oder auch mehr, sogar zig Meter betragen. Ein typischer Wert ist 10 Meter. Wenn ein Benutzer oder sein mobiles Endgerät von außen die vordefinierte Transitionszone betritt oder diese nach außen verlässt, wird automatisch ein Wechsel von einer GNSS-gestützten Navigation zu einer Navigation mittels Cloud-Raumanker oder umgekehrt initiiert.

In besonders bevorzugten Ausführungsformen kann an einem beliebigen geeigneten Ort, bspw. am Eingang zu einem Museum, einer Kunstgalerie, einer Bibliothek, einem Büro- oder Fabrikgebäude oder einer Niederlassung eines Unternehmens, einem Amts- oder sonstigen Gebäude, ein Cloud-Raumanker platziert und als Übergangsanker definiert werden. Der Übergangsanker wird vorzugsweise gemeinsam mit seinen GNSS-Koordinaten, also seinem Breitengrad, seinem Längengrad und seiner Höhe, und einem vordefinierten Radius, der die Größe der Transitionszone zur Initiierung eines Wechsels zwischen den Navigationsarten vorgibt, in demselben Koordinatensystem vorab gespeichert.

Betritt ein per GNSS navigierter Benutzer mit seinem mobilen Endgerät sowie der entsprechenden Navigationslösung die Transitionszone, kann das Initiieren der Navigation mittels Cloud-Raumanker vorteilhafterweise ein automatisches Einschalten einer Kamera des mobilen Benutzer-Endgerätes und Aufzeichnen der Umgebung des mobilen Benutzer-Endgerätes mit der Kamera umfassen, so dass durch Identifikation markanter und vorzugsweise kontrastreicher Punkte oder Stellen der Umgebung, wie Ecken, Kanten, Flächen und anderer markanter Objektmerkmale, Cloud-Raumanker automatisch detektiert und in der Navigationslösung platziert werden können.

Bei der Platzierung der Cloud-Raumanker werden vorzugsweise auch sogleich bidirektionale Verbindungen zwischen den Cloud-Raumankern erstellt. Auf der Basis der platzierten Cloud-Raumanker und der bidirektionalen Verbindungen zwischen diesen kann dann ein netzartiger Graph wenigstens innerhalb der Transitionszone aufgebaut werden, der die anfängliche Navigation mittels Cloud-Raumanker ermöglicht. Der Graph, der hier auch als Netz oder Auffangnetz bezeichnet wird, dient zum Starten der und als Basis für die anfängliche Navigation mittels Cloud-Raumanker.

Die Navigation zu einem gewünschten Ziel wird also mit Hilfe eines gebildeten Netzes oder Graphen bewerkstelligt und führt den Benutzer insbesondere auch in der Transitionszone um Hindernisse herum. Dies ist anders als bei einem herkömmlichen auf Cloud-Raumankern basierenden Navigationssystem, welches allein über den kürzesten Weg zum gewünschten Ziel, gegebenenfalls nicht an Hindernissen vorbei führt. Der erfindungsgemäße Graph wird bei der Platzierung bzw. Erstellung von Cloud-Raumankern bei der Bewegung einer Person, die sich in natürlicher Weise an Hindernissen vorbei bewegt, aufgebaut. Hierfür wird vorzugsweise jeweils zwischen den platzierten Cloud-Raumankern eine bidirektionale Verbindung hergestellt, welche die Distanz zwischen den Cloud-Raumankern sowie deren Identifikationsnummer beinhaltet. Die Verbindungen können sowohl zwischen Cloud-Raumankern, die chronologisch aufeinanderfolgend platziert wurden, als auch zwischen Cloud-Raumankern, die nicht chronologisch aufeinanderfolgend platziert wurden, hergestellt werden. Dies kann bewerkstelligt werden, indem die Anwendung permanent abfragt, ob zwischen dem aktuell lokalisierten und dem zuletzt lokalisierten bzw. platzierten Cloud-Raumanker bereits eine Verbindung besteht. Sollte dies nicht der Fall sein, wird eine bidirektionale Verbindung hergestellt. Auf diese Weise kann bei der Platzierung der Cloud-Raumanker bei der Bewegung einer Person nach und nach eine Art Netz bzw. Graph entstehen, welches bzw. welcher an menschliche Bewegungsmuster angepasst ist und um Hindernisse herum aufgebaut wird und somit die Basis für eine Navigationslösung darstellt, die auch in der Lage ist, den Benutzer um Hindernisse herum oder an diesen vorbei zu führen.

In einer vorteilhaften Weiterbildung des Verfahrens kann die automatische Platzierung der Cloud-Raumanker unterbrochen und die Navigation mittels Cloud-Raumanker begonnen werden, sobald innerhalb des gebildeten netzartigen Graphen ein Cloud-Raumanker oder der Übergangsanker und damit alle anderen in Beziehung stehenden Cloud-Raumanker lokalisiert werden. Die Lokalisierung aller Cloud-Raumanker, die in Verbindung mit dem gefundenen Cloud-Raumanker stehen, ist eine Funktion des Cloud-Raumanker-Dienstes.

Um Benutzern die Möglichkeit zu bieten, sich zu einem der Cloud-Raumanker navigieren zu lassen, können in weiteren vorteilhaften Ausführungsformen die Cloud-Raumanker bei der Platzierung optional als "Zielanker" bzw. möglicher Endpunkt definiert werden und auswählbar sein.

Die Navigation mittels Cloud-Raumanker auf der Basis des gebildeten Netzes bzw. Graphen kann vorteilhafterweise unter Anwendung eines Algorithmus zur Berechnung des kürzesten Pfades erfolgen. Insbesondere kann der Benutzer zu dem gewünschten Ziel innerhalb des Graphen unter Anwendung des A*-Algorithmus navigiert werden, der ein allgemein bekannter und weit verbreiteter Algorithmus ist, der in der Lage ist, einen optimalen Pfad zwischen zwei Knoten in einem Graphen zu finden. Je nach Art der Gewichtungsfunktion, die den Kanten ihre Länge zuordnet, kann "optimal" dabei den kürzesten, schnellsten oder auch einfachsten Pfad bedeuten. Bei dem erfindungsgemäßen Verfahren wird die Gewichtungsfunktion vorzugsweise gewählt, um den kürzesten Pfad durch die platzierten Cloud-Raumanker innerhalb des Graphen aufzufinden, obwohl auch andere Gewichtungsfunktionen möglich sind.

In einer vorteilhaften Ausführungsform des Verfahrens wird beim Erstellen der bidirektionalen Verbindungen zwischen Cloud-Raumankern überprüft, ob zwischen den detektierten Cloud-Raumankern bereits eine bidirektionale Verbindung besteht, und diese wird nur bei Nichtvorhandensein erstellt.

Wenn ein Benutzer die Transitionszone verlässt, sieht das Verfahren vor, dass automatisch die Navigation mittels GNSS gestartet bzw. zu dieser gewechselt wird.

Da das Auffangnetz oder der Graph durch die automatische Platzierung der Cloud-Raumanker, insbesondere dann, wenn die Transitionszone häufig betreten wird, schnell mit Cloud-Raumankern befüllt werden würde, beinhaltet das Verfahren vorzugsweise ferner eine Prozedur, welche die Anzahl der Cloud-Raumanker begrenzt und/oder dafür sorgt, dass diese stetig erneuert werden. Die Prozedur zum automatischen Erneuern von Cloud-Raumankern umfasst ein automatisches Platzieren von neuen Cloud-Raumankern, sobald die Transitionszone aus einer Navigation mittels GNSS heraus betreten wird. Durch ständige Anpassung der relevanten Cloud-Raumanker ermöglicht diese Prozedur dann die Verwendung von Cloud-Raumankern sowohl in beständigen als auch in sich ändernden Umgebungen. Das automatische Erneuern bedeutet in diesem Zusammenhang, dass das Platzieren von neuen Cloud-Raumankern allein durch die Navigationslösung, bspw. das in Form einer Applikation implementierte Verfahren in Zusammenarbeit mit einem bestehenden oder künftigen Cloud- bzw. Entwicklungs-Dienst zur Realisierung von Raumankern, ohne Zutun des Benutzers, der das mobile Endgerät trägt, erfolgt.

Die Prozedur zum automatischen Erneuern von Cloud-Raumankern umfasst vorzugsweise auch ein Herstellen von bidirektionalen Verbindungen zwischen den automatisch neu platzierten Cloud-Raumankern innerhalb der Transitionszone. Die neu platzierten Cloud-Raumanker und die hergestellten bidirektionalen Verbindungen können in die Cloud geladen und dort durch den Cloud-Raumanker-Dienst für künftige Zugriffe gespeichert werden.

Sobald anhand der durch eine Kamera des mobilen Benutzer-Endgerätes aufgezeichneten Daten ein Cloud-Raumanker detektiert bzw. lokalisiert worden ist, kann die Prozedur zum automatischen Erneuern von Cloud-Raumankern ein Beenden des automatischen Platzierens von Cloud-Raumankern umfassen.

Um die Anzahl der platzierten Cloud-Raumanker zu begrenzen, kann die Prozedur zum automatischen Erneuern von Cloud-Raumankern eine Bestimmung umfassen, ob eine Distanz zwischen dem zuletzt platzierten Cloud-Raumanker und dem detektierten bzw. lokalisierten Cloud-Raumanker, der den automatischen Platzierungsvorgang beendet hat, kleiner ist als ein definierter Mindestwert, wobei in diesem Fall der zuletzt platzierte Cloud-Raumanker gelöscht bzw. verworfen wird. Es werden also nur derartige Cloud-Raumanker platziert, die eine bestimmte Mindestdistanz zu dem detektierten bzw. lokalisierten Cloud-Raumanker (einem beliebigen Cloud-Raumanker innerhalb der Transitionszone oder dem Übergangsanker) aufweisen. Es könnte auch eine nicht zu überschreitende Maximaldistanz für die zu platzierenden Cloud-Raumanker vorgegeben werden. Ein Überfüllen des Auffangnetzes bzw. Graphen zur Navigation in der Transitionszone kann jedenfalls vermieden werden.

In vorteilhaften Ausführungsformen kann die Prozedur zum automatischen Erneuern von Cloud-Raumankern ferner ein Bestimmen einer Detektionsrate für die platzierten Cloud-Raumanker umfassen, die in Abhängigkeit von der Anzahl von Detektionen der Cloud-Raumanker und der Anzahl von Transitionen, also Übergängen von einer Navigation mittels GNSS in eine Navigation mittels Cloud-Raumanker, die durch Betreten der Transitionszone hervorgerufen werden, berechnet wird. Die Detektionsrate wird also berechnet, indem die Anzahl der Lokalisierungen pro Cloud-Raumanker durch die Anzahl an Transitionen geteilt wird. Auf diese Weise verändert sich die Detektionsrate bei jeder Transition, wodurch Cloud-Raumanker mit einer hohen bzw. niedrigen Detektionsrate identifiziert werden können.

Die Prozedur zum automatischen Erneuern von Cloud-Raumankern kann folglich ferner ein automatisches Löschen oder Verwerfen von Cloud-Raumankern innerhalb der Transitionszone in Abhängigkeit von den ermittelten Detektionsraten aufweisen. Zum Beispiel können nach einer bestimmten Anzahl von Transitionen die Cloud-Raumanker mit der niedrigsten Detektionsrate verworfen bzw. gelöscht werden. Somit können die in der Transitionszone befindlichen Cloud-Raumanker fortwährend erneuert werden, so dass sie sich an Benutzerverhalten und Veränderungen in der Umgebung anpassen können und nur die relevanten oder aktuellen Cloud-Raumanker für die Navigation in der Transitionszone beibehalten werden.

Gemäß einem weiteren Aspekt der Erfindung ist ein System zur Ermöglichung einer Navigation unter Verwendung eines globalen Navigationssatellitensystems (GNSS) und Cloud-Raumanker geschaffen, wobei das System wenigstens ein mobiles Benutzer-Endgerät aufweist, das eine Kamera zum Aufzeichnen von räumlichen Daten von der Umgebung, einen Prozessor, einen Speicher zur Speicherung von durch den Prozessor ausführbaren Instruktionen, einen GNSS-Empfänger zum Empfangen von Satellitenpositionssignalen von einem globalen Navigationssatellitensystem, eine Eingabe- und Ausgabeeinrichtung und eine Kommunikationseinrichtung zur Kommunikation mit entfernten Computern über ein Netzwerk aufweist, wobei die Instruktionen, wenn sie durch den Prozessor ausgeführt werden, den Prozessor veranlassen, ein Verfahren nach einer beliebigen der vorstehend beschriebenen Ausführungsformen durchzuführen.

In bevorzugten Ausführungsformen kann das System eine auf einem von dem wenigstens einen mobilen Benutzer-Endgerät implementierte Administrator-Applikation aufweisen, die eingerichtet sein kann, um anhand der von der Kamera aufgezeichneten Daten markante Stellen einer aufgezeichneten Umgebung zu erkennen und diese als Umgebungsinformationen zusammenzufassen, einem Benutzer die aufgezeichnete Umgebung anzuzeigen, dem Benutzer zu ermöglichen, Raumanker in der angezeigten aufgezeichneten Umgebung zu setzen, einen Übergangsanker und Parameter zur Definition der Übergangszone zu definieren, und bidirektionale Verbindungen zwischen Raumankern herzustellen. Die Administrator-Applikation kann ferner eingerichtet sein, um Daten, die den gesetzten Raumanker mit wenigstens einem Teil der zusammengefassten Umgebungsinformationen, die hergestellten bidirektionalen Verbindungen, den Übergangsanker und die Parameter zur Definition der Übergangszone betreffen, über die Kommunikationseinrichtung zu einem entfernten Computer eines Cloud-Raumanker-Dienstes zu senden, damit sie darin gespeichert werden. Die gespeicherten Daten können anschließend durch die gleiche oder eine andere Anwendung von dem Cloud-Raumanker-Dienst abgerufen und verwendet werden, um einen Benutzer mittels Cloud-Raumanker zu navigieren und insbesondere das erfindungsgemäße Verfahren zur Navigation sowohl innerhalb als auch außerhalb von Gebäuden durchzuführen und einen fließenden Übergang zwischen diesen Navigationsarten zu ermöglichen.

In bevorzugten Ausführungsformen kann das System gemäß der vorstehend erwähnten Ausführungsform ferner eine auf einem von dem wenigstens einen mobilen Benutzer-Endgerät implementierte Benutzer-Applikation aufweisen, die eingerichtet sein kann, um ein Betreten der Transitionszone durch das wenigstens eine mobile Benutzer-Endgerät zu erkennen und die Kamera des einen von dem wenigstens einen mobilen Benutzer-Endgerät einzuschalten oder, falls sie bereits eingeschaltet ist, eingeschaltet zu lassen, jedenfalls eine Navigation mittels Cloud-Raumanker zu initiieren. Hierzu kann die Benutzer-Applikation ferner eingerichtet sein, um anhand von der Kamera aufgezeichneter Daten markante Stellen einer aufgezeichneten Umgebung zu erkennen und diese in neu erstellten Umgebungsinformationen zusammenzufassen, Daten, die die neu erstellten Umgebungsinformationen betreffen, über die Kommunikationseinrichtung zu dem entfernten Computer des Cloud-Raumanker-Dienstes zu senden, damit sie darin mit gespeicherten Daten verglichen werden, um Cloud-Raumanker zu lokalisieren, und lokalisierte Cloud-Raumanker und zugehörige Informationen von dem entfernten Computer des Cloud-Raumanker-Dienstes zu empfangen. In einer Alternative könnte die Benutzer-Applikation selbst die in dem entfernten Computer des Cloud-Raumanker-Dienstes gespeicherten Daten zu Cloud-Raumankern, Umgebungsinformationen und bidirektionalen Verbindungen abrufen und die abgerufenen Daten mit den neu erstellten Umgebungsinformationen vergleichen, um Cloud-Raumanker in den von der Kamera aufgezeichneten Daten zu lokalisieren. Die Benutzer-Applikation kann jedenfalls eingerichtet sein, um einem Benutzer die aufgezeichnete Umgebung mitsamt der lokalisierten Cloud-Raumanker anzuzeigen und dem Benutzer zu ermöglichen, Weg- und Zielpunkte zu setzen. Die Benutzer-Applikation kann ferner eingerichtet sein, um anhand der abgerufenen Daten einen Graphen mit platzierten Cloud-Raumankern in der Transitionszone zu erstellen und den Benutzer unter Verwendung der Cloud-Raumanker innerhalb des erstellten Graphen durch die Transitionszone in Richtung des gesetzten Weg- oder Zielpunktes zu führen. Außerdem kann die Benutzer-Applikation eingerichtet sein, um entlang des Navigationsweges automatisch weitere Cloud-Raumanker zu platzieren und bidirektionale Verbindungen zwischen den platzierten und lokalisierten Cloud-Raumankern herzustellen, die dann in dem Cloud-Raumanker-Dienst gespeichert werden können.

Außerdem kann die Benutzer-Applikation ferner eingerichtet sein, um die Prozedur zum automatischen Erneuern von Cloud-Raumankern, einschließlich einem automatischen Anpassen, Verwerfen oder Löschen von Cloud-Raumankern in Abhängigkeit von erfasstem Benutzerverhalten und Veränderungen in der Umgebung, bspw. auf Basis der Distanz zwischen zuletzt platzierten Cloud-Raumankern und lokalisierten Cloud-Raumankern und/oder auf Basis einer berechneten Detektionsrate der Cloud-Raumanker, zu implementieren.

Im Übrigen gelten die im Zusammenhang mit dem erfindungsgemäßen Verfahren näher beschriebenen Effekte und Vorteile in gleicher Weise für das erfindungsgemäße System.

### KURZBESCHREIBUNG DER ZEICHNUNG

Weitere vorteilhafte Einzelheiten von Ausführungsformen der Erfindung ergeben sich aus Unteransprüchen, der Zeichnung sowie der zugehörigen Beschreibung. In der Zeichnung sind Ausführungsbeispiele des Gegenstandes der Erfindung dargestellt. Es zeigen:
Figur 1 ein Flussdiagramm eines Verfahrens zur Platzierung von Cloud-Raumankern und Herstellung bidirektionaler Verbindungen zwischen Cloud-Raumankern gemäß einer Ausführungsform der Erfindung;
Figur 2 ein schematisches Diagramm, das den Aufbau von bidirektionalen Verbindungen zwischen Cloud-Raumankern gemäß der vorliegenden Erfindung veranschaulicht;
Figur 3 ein Flussdiagramm eines Verfahrens zur Navigation mittels Cloud-Raumanker gemäß einer Ausführungsform der Erfindung;
Figur 4 ein schematisches Diagramm, das eine beispielhafte Architektur einer Navigationsanwendung bzw. eines Systems zur Navigation mittels Cloud-Raumanker gemäß einer Ausführungsform der vorliegenden Erfindung veranschaulicht;
Figur 5 ein schematisches Diagramm, das eine Kombination aus einer Navigation mittels GNSS und Cloud-Raumanker, einschließlich einer Transitionszone, zur Veranschaulichung der Funktionsweise des Systems und des Verfahrens gemäß der Erfindung veranschaulicht;
Figur 6 eine Tabelle, die den Verlauf von Detektionsraten von Cloud-Raumankern im Verlauf von mehreren Transitionen veranschaulicht; und
Figur 7 ein schematisches Diagramm, das den Verlauf der Detektionsraten im Verlauf der mehreren Transitionen nach Figur 6 veranschaulicht.

### DETAILLIERTE BESCHREIBUNG DER ERFINDUNG

Nachfolgend sind Ausführungsformen eines Verfahrens und Systems zur Navigation unter Verwendung globaler Navigationssatellitensysteme (GNSS) und Augmented Realtiy (AR) Cloud-Raumanker gemäß der Erfindung in größeren Einzelheiten beschrieben. In dem Bemühen, eine knappe und präzise Beschreibung zu geben, können ggfs. nicht alle Details, die zum allgemeinen Wissen und Können eines gewöhnlichen Fachmanns auf dem Gebiet der Technik gehören, mit allen Einzelheiten beschrieben sein. Ein gewöhnlicher Fachmann wird auch erkennen, dass die beschriebenen Ausführungsformen mit Modifikationen ausgeführt werden können, die in dem Schutzumfang der beigefügten Ansprüche liegen.

Sofern im Folgenden, wie auch im Vorstehenden, auf "Cloud-Raumanker" Bezug genommen wird, soll die verwendete Bezeichnung Cloud-Raumanker sich auf Raumanker beziehen, die durch bereits bestehende oder künftig aufkommende Cloud- bzw. Entwicklungs-Dienste zur Realisierung von Raumankern bereitgestellt werden. Die bekanntesten Dienste, die derzeit zur Verfügung stehen, stellen "Azure Spatial Anchors" von Microsoft Corporation und "Google Cloud Anchors" von Google LLC dar.

Die vorliegende Erfindung kann im Rahmen von mobilen Navigationslösungen oder -anwendungen für mobile Endgeräte, insbesondere Smartphones, Tablets, Datenbrillen, Laptops, PDAs (Personal Digital Assistants), dedizierte mobile Navigationsvorrichtungen und andere geeignete mobile Endgeräte, verwendet werden.

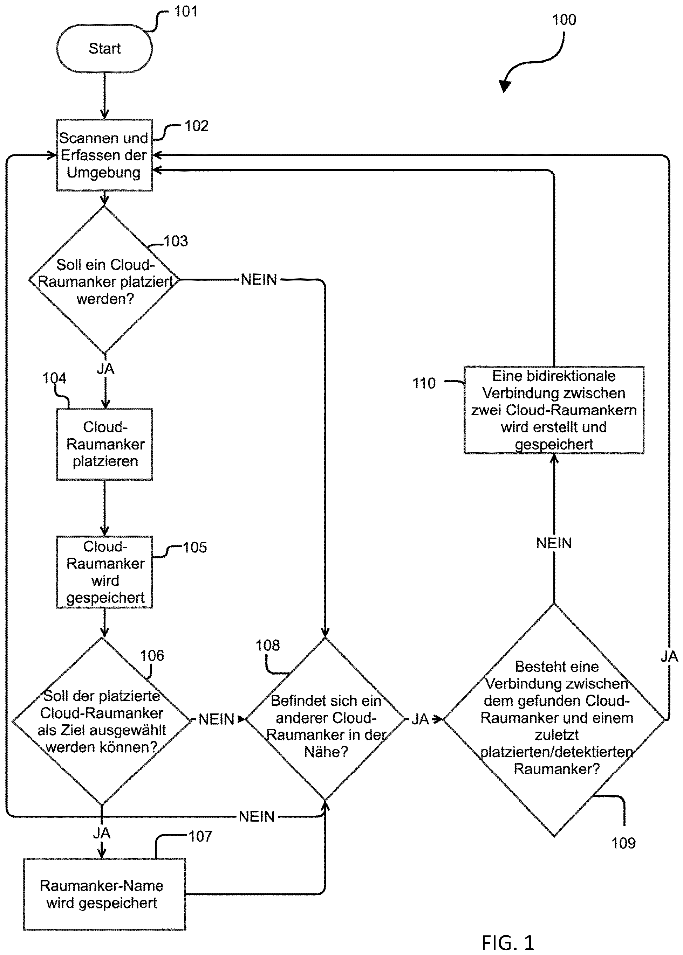

Indem nun auf die Figuren 1-7 der Zeichnung Bezug genommen wird, ist in Figur 1 ein Flussdiagramm veranschaulicht, das den Ablauf eines Verfahrens 100 zur Platzierung von Raumankern und Erstellung von bidirektionalen Verbindungen zwischen diesen veranschaulicht. Das dargestellte Verfahren 100 bildet eine Basis für das erfindungsgemäße Verfahren zur Ermöglichung einer Navigation unter Verwendung eines globalen Navigationssatellitensystems (GNSS) und Cloud-Raumanker und eines Übergangs zwischen diesen, wie nachfolgend beschrieben. Insbesondere können anhand der platzierten Cloud-Raumanker und der erstellten bidirektionalen Verbindungen zwischen diesen Graphen der Cloud-Raumanker erstellt werden, die die Grundlage für die erfindungsgemäße Navigation bilden.

Die Erstellung eines erfindungsgemäßen Graphen bzw. die Platzierung von Cloud-Raumankern wird vorzugsweise durch eine erste Anwendung, bspw. eine Administrator-Applikation, für mobile Endgeräte implementiert, die im Schritt 101 des Verfahrens 100 gestartet wird. Die Anwendung kann zu einem beliebigen Zeitpunkt beendet werden.

Nachdem die Anwendung gestartet wurde, wird im Schritt 102 die Umgebung des Benutzers mit Hilfe von Augmented Reality (AR)-Funktionen, unter Verwendung einer Kamera des mobilen Endgerätes des Benutzers, gescannt und erfasst. Dabei werden von der Anwendung bspw. markante Punkte oder Stellen, wie Ecken, Kanten und/oder Flächen, in der Umgebung erkannt. Diese sind erforderlich, damit Cloud-Raumanker platziert werden können.

Wurden die markanten Stellen von der Anwendung erfasst, kann der Benutzer anschließend im Schritt 103 entscheiden, ob er einen Cloud-Raumanker platzieren will oder nicht.

Wenn er sich dazu entschließt, einen Cloud-Raumanker zu platzieren, wird anschließend im Schritt 104 ein Cloud-Raumanker auf einem bestimmten Punkt platziert. Dabei werden die markanten und kontrastreichen Punkte oder Stellen der Umgebung des Cloud-Raumankers, wie Ecken, Kanten und Objektmerkmale, identifiziert und in Beziehung zueinander gesetzt.

Die daraus entstandene Punktwolke sowie der sich darin befindende bzw. darin verankerte Cloud-Raumanker werden im Anschluss zu einem Cloud-Raumanker-Dienst übermittelt und im Schritt 105 in dem Cloud-Raumanker-Dienst gespeichert. Zusätzlich wird eine eindeutige Identifikationsnummer des Cloud-Raumankers in einer Datenbank des Cloud-Raumanker-Dienstes gespeichert. Diese Informationen dienen bspw. dazu, den gespeicherten Cloud-Raumanker zu einem späteren Zeitpunkt ansteuern, verschiedene Cloud-Raumanker-Identifikationsnummern in Beziehung zueinander setzen und bestimmte Objekte einem bestimmten Cloud-Raumanker zuordnen zu können.

Zusätzlich können bei der Platzierung geräteinterne Sensormesswerte, wie bspw. Signale oder Signalstärken vom GNSS, WLAN (Wireless Local Area Network) und/oder BLE (Bluetooth Low Energy) in die Informationen des Cloud-Raumankers integriert werden. Es sind auch andere Signale und Signalstärken, wie bspw. erfasste Infrarot-, CDMA-, 3G-, 4G/LTE-, NFC-, Mobilfunk-, z.B. GSM-, A-GSM-, FM-Radio-Signale und dgl., verwendbar. In bevorzugten Ausführungsformen können insbesondere die GNSS-Position (Breitengrad, Längengrad, Höhe), die Signalstärke von WLAN - Access Points und/oder Bluetooth-Beacons, die sich in Reichweite des Benutzer-Endgerätes befinden, gespeichert werden.

Diese Informationen können insbesondere bei Anwendungen von Vorteil sein, in denen eine sehr große Anzahl an Cloud-Raumankern vorkommt. Hier können die zusätzlich abgespeicherten Sensormesswerte, die zu den abgespeicherten Cloud-Raumankern gehören, später bei einer Detektion berücksichtigt werden und für eine Beschleunigung der Detektion sorgen. Bspw. kann der Cloud-Raumanker-Dienst nur die Punktwolken, die sich in einem bestimmten Umkreis, z.B. in einem Umkreis von 100 Metern, um das mobile Endgerät bzw. den Benutzer befinden, berücksichtigen und mit den Punktwolken, die bei dem Detektionsvorgang entstehen, vergleichen. Der Rechenaufwand kann deutlich reduziert werden.

Nachdem der Benutzer einen Cloud-Raumanker platziert hat, hat er im Schritt 106 die Möglichkeit, diesen als wählbares Navigationsziel bzw. als einen "Zielanker" zu definieren. Wenn sich der Benutzer dafür entscheidet, einen Zielanker zu definieren, werden die Identifikationsnummer des Cloud-Raumankers sowie ein beliebiger Name des Navigationsziels in einer Datenbank gespeichert. Diese können in einer gesonderten Datenbank gespeichert werden, die sich von der Datenbank des Cloud-Raumanker-Dienstes, in dem die Cloud-Raumanker mit ihren Identifikationsnummern gespeichert werden, unterscheidet. Es könnte aber auch die gleiche Datenbank hierzu verwendet werden.

Nachdem der Cloud-Raumanker gespeichert und optional als Navigationsziel definiert worden ist, wird im Schritt 108 die mit der Kamera aufgezeichnete Umgebung des Benutzer-Endgerätes nach bestehenden Cloud-Raumankern abgesucht. Dieser Vorgang wird auch initiiert, wenn sich der Benutzer im Schritt 103 nicht für die Platzierung eines Cloud-Raumankers entscheidet.

Wenn beim Absuchen der aufgezeichneten Umgebung im Schritt 108 kein bestehender Cloud-Raumanker detektiert wird, kehrt das Verfahren 100 zum Schritt 102 zurück. Wenn hingegen im Schritt 108 ein bestehender Cloud-Raumanker detektiert wird, schreitet das Verfahren 100 zum Schritt 109 fort, in dem anhand einer Datenbank, die eine der oben erwähnten Datenbanken sein kann, geprüft wird, ob bereits eine bidirektionale Verbindung zwischen dem detektierten Cloud-Raumanker und einem zuvor platzierten bzw. detektierten Cloud-Raumanker besteht. Wenn dies der Fall ist, kehrt das Verfahren anschließend zum Schritt 102 zurück. Andernfalls wird anschließend im Schritt 110 eine bidirektionale Verbindung zwischen den beiden Cloud-Raumankern, d.h. zwischen dem zuletzt platzierten bzw. detektierten und dem aktuell detektierten Cloud-Raumanker, hergestellt.

Vorzugsweise können hierfür in einer der vorstehend erwähnten Datenbanken zwei zusätzliche Einträge angelegt werden. Ein erster Eintrag definiert jeweils eine der beiden Richtungen (Direktionen). Zusätzlich wird für beide Richtungen (Direktionen) in einem zweien Eintrag jeweils die Distanz zwischen den Cloud-Raumankern gespeichert. Diese Informationen dienen zum Aufbau eines Graphen, in dem sich der Benutzer zu einem späteren Zeitpunkt zu einem gewünschten Ziel navigieren lassen kann, wobei die gespeicherten Distanzen die Ermittlung eines geeigneten Navigationspfades innerhalb des Graphen unterstützen.

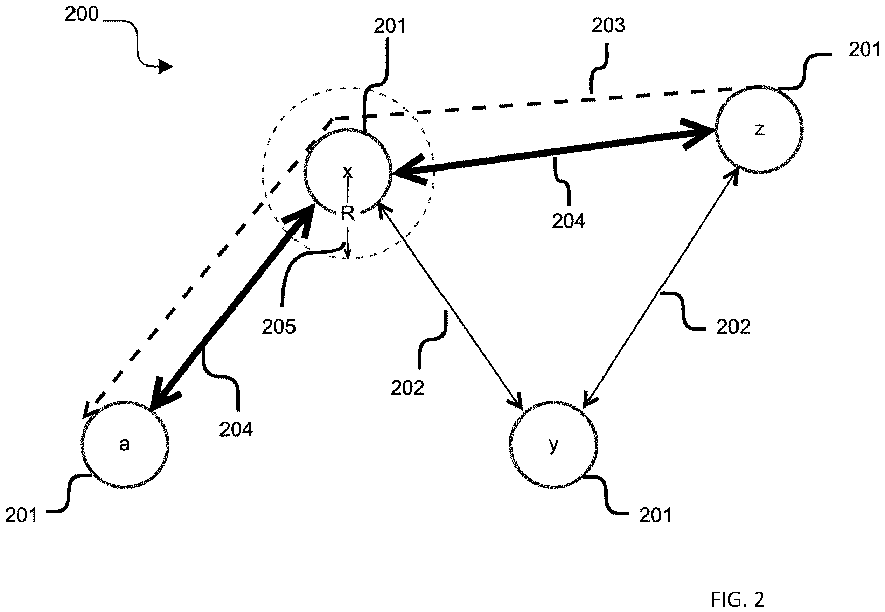

Indem nun auf Figur 2 Bezug genommen wird, ist dort der Aufbau 200 von bidirektionalen Verbindungen bzw. eines Graphen für die Navigation gemäß einer Ausführungsform der Erfindung in schematisierter Weise dargestellt.

Wenn bspw. drei Cloud-Raumanker 201, hier x, y und z, mit den bidirektionalen Verbindungen x-y sowie y-z platziert wurden, die anhand der bidirektionalen Pfeile 202 zu erkennen sind, und der Benutzer einen weiteren Cloud-Raumanker 201, hier a, platzieren möchte, können mit Hilfe des Verfahrens der vorliegenden Erfindung weitere bidirektionale Verbindungen 202 zwischen den Cloud-Raumankern 201, wie bspw. die bidirektionale Verbindung 202 zwischen den Cloud-Raumankern a und x, hergestellt werden. Wenn sich ein Benutzer mit einer auf der vorliegenden Erfindung basierenden Navigationslösung z.B. auf dem Weg 203 von dem Cloud-Raumanker z über den Cloud-Raumanker x bewegt, um den Cloud-Raumanker a zu setzen, werden automatisch die bidirektionalen Verbindungen 204 z-x und x-a hergestellt.

Zu diesem Zweck läuft vorzugsweise im Hintergrund der ersten Anwendung eine Funktion oder Routine, die prüft, ob ein Cloud-Raumanker erkannt wurde und ob zwischen diesem und dem zuletzt platzierten oder detektierten Cloud-Raumanker 201 bereits eine Verbindung besteht. Die Detektion kann dabei wahlweise optisch und/oder geometrisch erfolgen.

Bei der optischen Detektion handelt es sich um die bereits vorstehend beschriebene Art der Detektion, bei der Cloud-Raumanker anhand markanter Umgebungspunkte oder -stellen detektiert werden. So erkennt die Anwendung bspw., dass sich der Benutzer in unmittelbarer Nähe eines Cloud-Raumankers befindet, wenn die Anwendung markante Stellen eines bestehenden Cloud-Raumankers in der Umgebung des Benutzers erfasst.

Bei der geometrischen Detektion wird eine nicht sichtbare Sphäre mit einem beliebigen Radius R um die Cloud-Raumanker gelegt, wie in Figur 2 mit dem Bezugszeichen 205 angezeigt, die bei Eintritt ebenfalls den Prozess zur Überprüfung und zum Aufbau einer bidirektionalen Verbindung bewirkt. Diese Art der Detektion ist nur bei Cloud-Raumankern anzuwenden, die aufgrund bestehender bidirektionaler Verbindungen von der Navigationslösung bereits gefunden wurden.

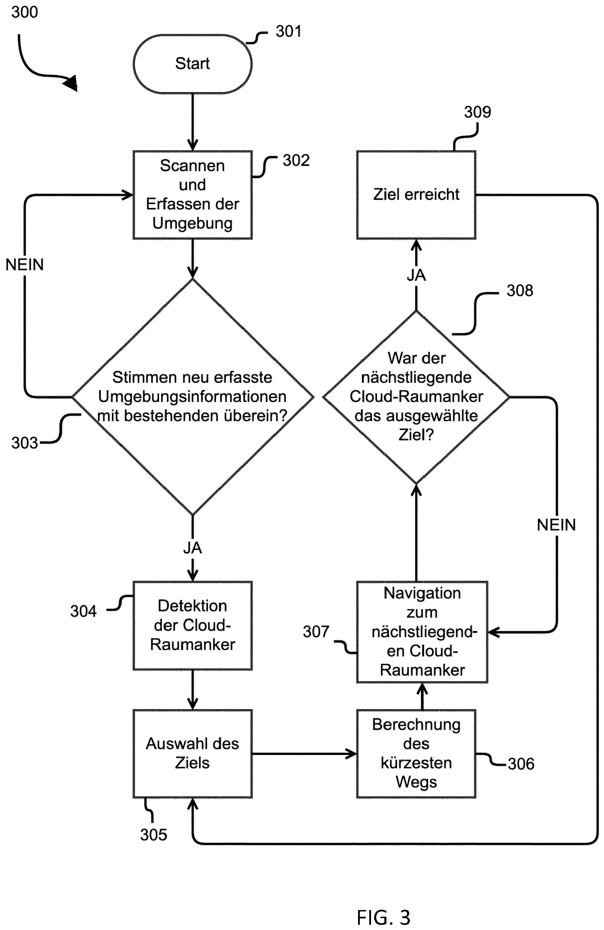

Für die Navigation mit Hilfe von Cloud-Raumankern ist vorzugsweise eine zweite Anwendung, bspw. eine Benutzer-Applikation, für mobile Benutzer-Endgeräte vorgesehen. Nachdem in dem vorstehend beschriebenen Verfahren ein Graph bestehend aus Cloud-Raumankern und den bidirektionalen Verbindungen sowie Distanzen zwischen diesen erstellt wurde, kann ein Benutzer innerhalb des Graphen zu einem beliebigen gewünschten Ziel navigiert werden. Die Navigation ist in Figur 3 in Form eines Flussdiagramms dargestellt, das den Ablauf eines Verfahrens 300 zur Navigation innerhalb eines Graphen aus Cloud-Raumpunkten gemäß einer Ausführungsform der Erfindung veranschaulicht.

Bezugnehmend auf Figur 3 werden, nachdem die zweite Anwendung im Schritt 301 gestartet wurde, die platzierten Cloud-Raumanker im Schritt 302 durch Scannen und Erfassen der Umgebung mit einer Kamera und der zweiten Anwendung detektiert. Hierfür können optional auch die Sensorsignale vom GNSS, WLAN und/oder BLE oder andere in der Datenbank des Cloud-Raumanker-Dienstes mit gespeicherten Sensorsignale und Signalstärken berücksichtigt werden. Diese können bspw. sicherstellen, dass nur die Cloud-Raumanker, die sich in einem bestimmten Umkreis, bspw. in einem Radius von etwa 100 Metern, um den Benutzer befinden, erfasst werden. Dadurch können die Cloud-Raumanker schneller detektiert werden. Die zweite Anwendung sucht dann nach Cloud-Raumankern in der Umgebung, wobei die bereits oben beschriebene Methode zur Detektion von Cloud-Raumankern verwendet werden kann, bei der die neu erfassten Umgebungsinformationen im Schritt 303 mit bestehenden, vorgespeicherten Informationen hinsichtlich Übereinstimmung überprüft werden. Wenn ein Cloud-Raumanker lokalisiert wurde, werden im Schritt 304 entsprechend auch alle Cloud-Raumanker detektiert, die mit den gefundenen Cloud-Raumankern verbunden sind.

Danach hat der Benutzer im Schritt 305 die Möglichkeit, einen Wegpunkt oder "Zielanker" auszuwählen, zu dem er sich navigieren lassen möchte.

Hat der Benutzer ein Ziel ausgewählt, wird der netzartige Graph, wie bspw. der in Figur 2 dargestellte Graph, geladen bzw. gebildet, der aus den vorgespeicherten Cloud-Raumankern und den bidirektionalen Verbindungen bzw. Distanzen zwischen den Cloud-Raumankern besteht. Der Graph sowie der Startpunkt des Benutzers, also die Position des nächstliegenden Cloud-Raumankers, werden an einen geeigneten Algorithmus zur Berechnung eines zu dem Zielanker führenden Pfades übergeben. Bevorzugterweise, ohne darauf beschränkt zu sein, wird der A*-Algorithmus verwendet, der zur Berechnung eines kürzesten Pfades zwischen zwei Knoten in einem Graphen mit Gewichtungsfunktionen dient und insbesondere in Navigationslösungen weit verbreitet ist. Es sind aber auch andere Algorithmen hier verwendbar. Jedenfalls kann der verwendete Algorithmus im Schritt 306 anhand des Graphen den vorzugsweise kürzesten oder den schnellsten (oder unter Berücksichtigung von Benutzerwünschen den bevorzugten) Weg zu dem ausgewählten Zielanker berechnen und als Ergebnis eine Liste an Cloud-Raumankern liefern, die der Benutzer nacheinander ansteuern muss, um zu seinem Ziel zu gelangen.

Anhand der Liste kann der Benutzer dann im Schritt 307 jeweils zu dem nächstliegenden Cloud-Raumanker navigiert werden, solange im Schritt 308 festgestellt wird, dass das ausgewählte Ziel noch nicht erreicht ist. Wenn im Schritt 308 festgestellt wird, dass der nächstliegende Cloud-Raumanker dem ausgewählten Zielanker entspricht, ist das ausgewählte Ziel im Schritt 309 erreicht. Der Benutzer kann anschließend ein neues Ziel auswählen oder die zweite Anwendung beenden.

Die Navigation von einem Cloud-Raumanker zu einem anderen Cloud-Raumanker erfolgt ähnlich wie beim Aufbau der bidirektionalen Verbindungen bzw. Beziehungen, wie in Figur 2 veranschaulicht. So ist jedem Cloud-Raumanker eine Sphäre mit einem bestimmten Umkreis, bspw. einem bestimmten Radius R zugeordnet, wie durch das Bezugszeichen 205 in Figur 2 angezeigt, wobei die vorbestimmte Sphäre den Bereich vorgibt, den der Benutzer bzw. sein mobiles Endgerät betreten muss, um jeweils zu dem nächsten Cloud-Raumanker in der Liste navigiert zu werden.

Damit die Navigation möglichst benutzerfreundlich erfolgen kann, können dem Benutzer innerhalb einer Benutzeroberfläche auf einem Display des mobilen Endgerätes unterschiedliche Elemente angezeigt werden. Es können bspw. ein Pfeil, der in Richtung des nächstgelegenen Cloud-Raumankers zeigt, die Entfernung zum nächstliegenden Cloud-Raumanker bzw. Ziel, eine Vorschau, die anzeigt, ob der Benutzer sich nach Erreichen des nächstgelegenen Zieles bzw. Cloud-Raumankers nach rechts, links, oben oder unten bewegen muss, und die verbliebene Entfernung zu dem Zielanker oder Endpunkt angezeigt werden. Es können nur ein Teil oder beliebige Kombinationen dieser Informationen oder auch weitere relevante Informationen zur Unterstützung der Navigation dem Benutzer angezeigt werden.

Die für die Navigation erforderlichen Berechnungen werden vorzugsweise in jedem Frame der auf dem Display des mobilen Endgerätes dargestellten Anzeigebilder aktualisiert, so dass der Benutzer keinerlei Latenz wahrnehmen wird. Es können aber auch längere Aktualisierungsperioden oder unregelmäßige Aktualisierungszeiten vorgesehen sein.

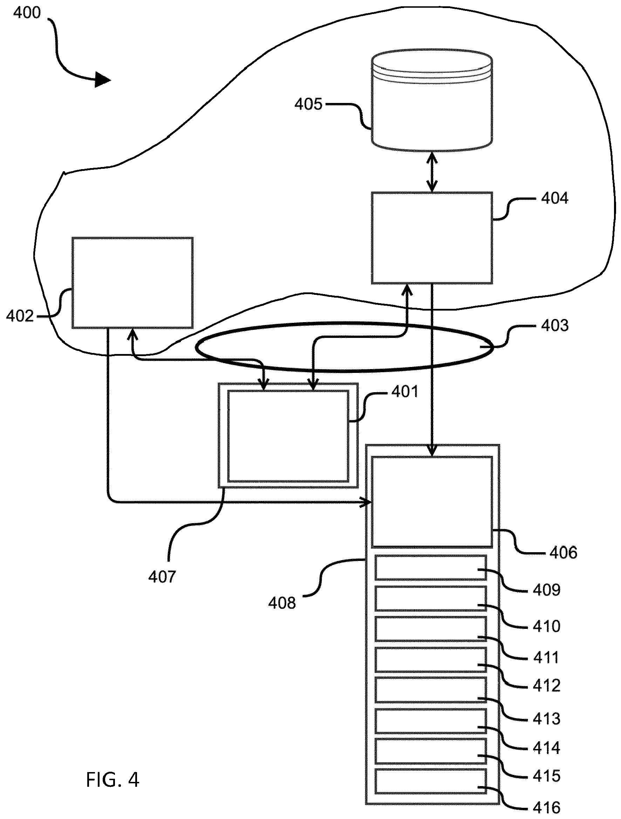

In Figur 4 ist eine bespielhafte Architektur einer Navigationsanwendung mittels Cloud-Raumankern und mittels GNSS (nachfolgend auch als System 400 bezeichnet) gemäß einer Ausführungsform der Erfindung in stark vereinfachter Darstellung veranschaulicht. In dem erfindungsgemäßen System 400 werden die beschriebenen Funktionen zur Platzierung von Cloud-Raumankern bzw. zur Erstellung eines Graphen sowie zur Navigation innerhalb dessen bevorzugterweise in zwei getrennten Anwendungen implementiert. Prinzipiell könnten Sie aber auch in einer einzigen gemeinsamen Anwendung integriert sein.

Als erste Anwendung in der bevorzugten Ausführungsform der Erfindung ist eine sogenannte Administrator-Applikation bzw. Admin-App 401 zur Platzierung bzw. Erstellung sowie ggfs. zur Bearbeitung des Graphen, wie vorstehend anhand der Figuren 1 und 2 beschrieben, vorgesehen. Die Administrator-Applikation 401 ist mit einem entsprechenden Cloud-Raumanker-Dienst 402 über ein Netzwerk 403, z.B. das Internet, verbunden, wobei der Cloud-Raumanker-Dienst 402 für die Erstellung, Detektion und Verwaltung der Cloud-Raumanker, d.h. der gespeicherten Punktwolken in Verbindung mit einem darin befindlichen Ankerpunkt, zuständig und hierfür eingerichtet ist.

Zusätzlich kommuniziert die erste Anwendung 401 über das Netzwerk 403 mit einem weiteren entfernten Computer 404, bspw. einem Webserver, der als Schnittstelle zwischen der ersten Anwendung und einer Datenbank 405 dient, in der vorzugsweise die Identifikationsnummern der Cloud-Raumanker sowie die bidirektionalen Verbindungen und Distanzen gespeichert werden. Der entfernte Computer bzw. Webserver 404 kann auch für die Berechnung der Wege mit Hilfe eines geeigneten Algorithmus, insbesondere des A*-Algorithmus, zuständig sein.

Als zweite Anwendung in der bevorzugten Ausführungsform der Erfindung ist eine Benutzer-Applikation oder Benutzer-App 406 vorgesehen, die im Wesentlichen oder ausschließlich zur Navigation innerhalb von auf Cloud-Raumankern 201 basierenden Graphen dient. Die Benutzer-Applikation kommuniziert ebenfalls über das Netzwerk 403, z.B. das Internet, mit dem Cloud-Raumanker-Dienst 402, um Cloud-Raumanker zu detektieren, und erhält basierend darauf über den Webserver 404 die erforderlichen Informationen oder Listen zur Navigation.

Die Administrator-Applikation 401 und die Benutzer-Applikation 406 sind auf einem mobilen Endgerät 407 bzw. 408 implementiert, das insbesondere ein Smartphone, ein Tablet, ein Laptop, eine Datenbrille oder dgl. sein kann. Die Applikationen 401, 406 können auch auf speziellen Navigationsgeräten implementiert sein, die sich zur Navigation mittels GNSS und mittels Cloud-Raumanker eignen. Die Endgeräte 407, 408 können, wie dargestellt, gesonderte Geräte oder ein einziges Gerät sein, das beide Applikationen 401 und 406 umfasst.

Wie in Figur 4 veranschaulicht, kann das mobile Endgerät 408 mehrere Komponenten umfassen, die zur Durchführung des erfindungsgemäßen Verfahrens zur Navigation eines Benutzers mittels GNSS und mittels AR-Cloud-Raumanker verwendet werden können. Obwohl im Folgenden das Endgerät 408 hier näher beschrieben ist, sollte verstanden werden, dass das Endgerät 407 im Wesentlichen mit gleichen Komponenten aufgebaut sein kann, so dass eine gesonderte Beschreibung des Endgerätes 407 hierin vermieden wird und auf die nachstehende Beschreibung des Endgerätes 408 verwiesen wird.

Das mobile Endgerät 408 (407) kann, wie dargestellt, einen Empfänger 409 zum Empfang von Satellitenpositionssignalen, kurz GNSS-Empfänger, sowie eine zugehörige GNSS-Navigationsanwendung 410 zur Navigation mittels GNSS enthalten. Die GNSS-Navigationsanwendung 410 kann von der Benutzer-Applikation 406 (und der Admin-App 401) gesondert und auch durch eine beliebige Navigationsapplikation gebildet sein, wie sie derzeit in großer Anzahl als kostenlose oder kostenpflichtige Applikationen zur Verfügung stehen oder künftig entwickelt werden.

Außerdem enthält das mobile Endgerät 408 (407) eine Kamera 411, einen Prozessor 412, einen Speicher 413, ein Display 414, eine Eingabe-/Ausgabeeinrichtung 415 und eine Kommunikationseinrichtung 416.

Die Kamera 411 kann eine beliebige Kamera sein, die in der Lage ist, die reale Umgebung eines Benutzers im Sichtfeld der Kamera zu erfassen und Bilddaten aufzuzeichnen. Die Kamera kann eine Kamera für sichtbares Licht (z.B. eine RGB-Kamera), insbesondere eine Digitalkamera, sein, kann aber auch den Nahinfrarotbereich mit abdecken. Es kann auch eine Tiefenkamera verwendet werden. Außerdem können zwei oder mehrere Kameras verwendet werden.

Der Prozessor 412 ist eingerichtet, um Instruktionen, die bspw. in dem Speicher 413 gespeichert sind, auszuführen. Die Instruktionen können Instruktionen der Benutzer-Applikation 406 und/oder der Administrator-Applikation 401, Instruktionen der GNSS-Navigationsapplikation 410 und weitere Instruktionen umfassen, die für den Betrieb des mobilen Endgerätes 408 (407), einschließlich zur Durchführung der hier beschriebenen Verfahren, Prozeduren oder Funktionen, erforderlich sind, unabhängig davon ob diese als Programme oder Programmodule in Form von ausführbaren Dateien, Datendateien, Programmbibliotheken, Treibern, Skripten, Datenbankeinträgen, etc. implementiert sind.

Zusätzlich zu dem wenigstens einen Prozessor 412 können auch Hardware- und Firmware-Logikbaugruppen vorgesehen sein, die eingerichtet sein können, um Hardware- oder Firmware-Instruktionen auszuführen.

Der Speicher 413 kann beliebige austauschbare oder fest eingebaute Vorrichtungen umfassen, die in der Lage sind, Instruktionen und Daten wiederabrufbar zu speichern. Der Speicher kann beliebige flüchtige, nicht-flüchtige, dynamische, statische, Schreib/Lese-, Nur-Lese-, Direktzugriffs- oder sonstige Speichervorrichtungen umfassen. Insbesondere können Halbleiterspeicher, wie z.B. RAM, EPROM, EEPROM, DRAM, etc., verwendet werden. Es könnten prinzipiell auch optische Speicher, z.B. CD, DVD, Blueray etc., und/oder magnetische Speicher, z.B. Festplatten, Laufwerke oder dgl., verwendet werden.

Das Display 414 ist eingerichtet, um dem Benutzer eine visuelle Darstellung der in dem Speicher 413 vorgehaltenen Daten anzuzeigen. Die visuelle Darstellung kann die Form einer Benutzeroberfläche (GUI, Graphical User Interface) einnehmen. Innerhalb des Verfahrens gemäß der vorliegenden Erfindung kann die Benutzeroberfläche insbesondere die von der Kamera aufgezeichnete Umgebung mit einem dieser Umgebung zugeordneten virtuellen Inhalt, einschließlich an bestimmten Positionen verankerter Cloud-Raumanker sowie Informationen zur Navigation eines Benutzers, darstellen.

Die Eingabe-/Ausgabe-Einrichtung 415 kann weitere Ausgabemittel, wie z.B. Lautsprecher oder anschließbare Kopf- oder Ohrhörer umfassen, über die auch Navigationsinformationen akustisch ausgegeben werden können. Es können weitere Ausgabe-Schnittstellen zur Verbindung mit weiteren Ausgabegeräten vorgesehen sein.

Die Eingabe-/Ausgabe-Einrichtung 415 kann ferner Eingabemittel, wie bspw. eine Tastatur, Maus, einen Berührungsbildschirm, der auch als das Display 414 dienen kann, ein Mikrofon oder dgl. umfassen. Anstelle einer Hardware-Tastatur kann eine virtuelle Tastatur bereitgestellt werden. Das Endgerät 408 (407) kann weitere Einrichtungen zur Eingabe von Daten, wie bspw. eine Spracherkennungseinrichtung oder dgl., umfassen.

Die Kommunikationseinrichtung 416 ist eingerichtet, um das mobile Endgerät 408 (407) mit einem oder mehreren entfernten Computersystemen kommunikationsmäßig zu verbinden. Die Kommunikationseinrichtung 416 kann Vorrichtungen zur drahtgebundenen und/oder drahtlosen Übertragung umfassen, die mit einem oder mehreren verschiedenen Kommunikationsprotokollen kompatibel sind. Als nicht beschränkende Beispiele kann die Kommunikationseinrichtung 416 zur Kommunikation über ein drahtloses Telefonnetzwerk, ein drahtgebundenes oder drahtloses lokales Netzwerk oder ein Weitbereichsnetzwerk eingerichtet sein. Die Kommunikationseinrichtung kann dem Endgerät 408 (407) ermöglichen, Meldungen, Informationen und Daten zu anderen Vorrichtungen oder entfernten Computern über das Netzwerk 403, z.B. das Internet, zu senden und/oder von diesen zu empfangen.

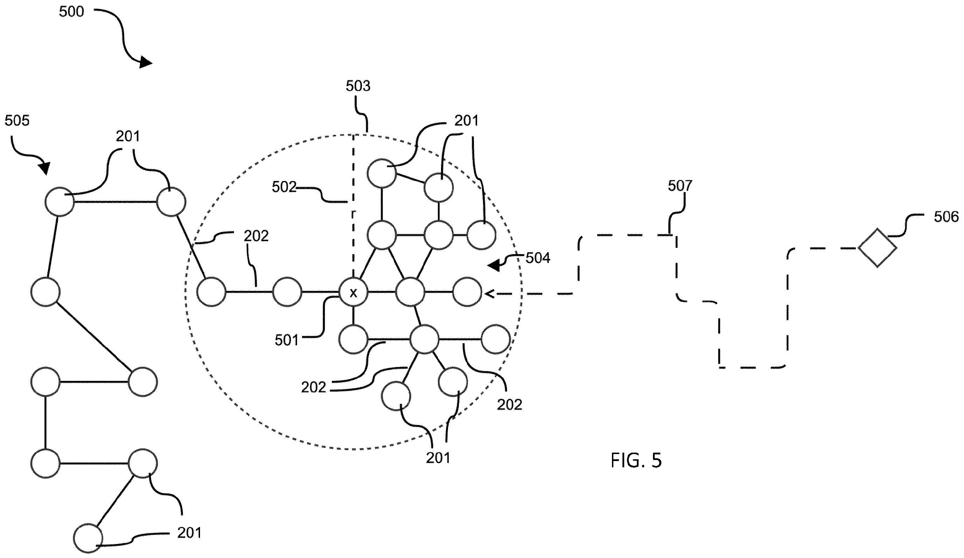

Bezugnehmend auf Figur 5 ist dort eine schematische Darstellung gezeigt, die das Verfahren 500 bzw. die Funktionsweise des Systems 400 zur Kombination einer Navigation mittels Cloud-Raumanker und mittels GNSS und zur Ermöglichung eines fließenden Übergangs zwischen den beiden Navigationsarten gemäß der bevorzugten Ausführungsform der Erfindung veranschaulicht.

Wie bereits vorstehend erwähnt, ist zum Aufbau des Systems gemäß der vorliegenden Erfindung zusätzlich zu der Navigationsanwendung mittels Cloud-Raumanker eine Navigationsanwendung basierend auf einem GNSS zu verwenden. Diese kann von bereits etablierten Anbietern von Navigations-Applikationen bezogen werden oder auch in die erfindungsgemäße Navigationsanwendung mittels Cloud-Raumanker, insbesondere die Benutzer-Applikation 406 nach Figur 4, integriert sein.

Um das System gemäß der vorliegenden Erfindung zur Navigation anhand von Cloud-Raumankern und GNSS verwenden zu können, ist es erforderlich, zunächst einen Übergangspunkt bzw. Übergangsanker 501 zu platzieren. Der Übergangspunkt bzw. Übergangsanker verfügt über bekannte GNSS-Koordinaten, also über bekannte Längengrade, Breitengrade und Höhe in dem GNSS-Koordinatensystem, welche in einer Datenbank gespeichert werden. Zur Platzierung des Übergangsankers eignen sich insbesondere Orte, an denen die Applikation von einer Navigation im Freien, außerhalb eines Gebäudes, in eine Navigation innerhalb eines Gebäudes wechseln soll. Hierzu zählen bspw. Eingangstüren von Gebäuden. Die Gebäude können beliebige interessierende Gebäude, wie bspw. Museen, Galerien oder andere gewünschte Objekte sein. Ein Übergangsanker könnte aber auch an einem Ort im Freien platziert werden, an dem die Applikation von einer Navigation im Freien mittels GNSS zu einer Navigation im Freien mittels Cloud-Raumanker oder umgekehrt wechseln soll.

Der Übergangsanker 501 kann mittels der Administrator-Applikation 401 des Systems 400 nach Figur 4 durch einen Administrator gesetzt bzw. platziert werden. Der Übergangsanker 501 könnte prinzipiell aber auch durch einen Benutzer der Benutzer-Applikation 406 im Vorfeld oder zu Beginn einer Navigationssitzung gesetzt werden.

Der Übergangsanker 501 kann außerdem als ein wählbares Ziel definiert werden, so dass Benutzer diesen sowohl zur Navigation per GNSS als auch zur Navigation per Cloud-Raumanker auswählen können.

Außerdem wird um den Übergangspunkt bzw. Übergangsanker 501 in einem vorbestimmten Umfeld eine sogenannte "Transitionszone" 503 festgelegt. Die Transitionszone 503 kennzeichnet einen Bereich, bei dessen Überschreiten zwischen einer Navigation mittels GNSS und einer Navigation mittels Cloud-Raumanker 201 gewechselt wird. Die Transitionszone 503 dient zur Erstellung eines Netzes oder Graphen 504 aus Cloud-Raumankern, das hier auch als ein Auffangnetz oder Graph 504 bezeichnet wird. Das Auffangnetz bzw. der Graph 504 fängt einen Benutzer bei der Navigation per GNSS zu dem Übergangsanker 501 in der Transitionszone 503 auf und ermöglicht damit den Wechsel aus der Navigation mittels GNSS zu der Navigation mittels Cloud-Raumanker 201 und umgekehrt. Das Verfahren 500 und das System 400 gemäß der vorliegenden Erfindung umfassen einen Aufbau des Auffangnetzes bzw. Graphen 504 in der Transitionszone 503 unter Berücksichtigung von Benutzerverhalten.

Die Transitionszone 503 kann prinzipiell eine beliebige Form aufweisen. Sie kann bspw. rechteckig, polygonförmig sein oder auch einer unregelmäßige Gestalt aufweisen. In der in Figur 5 dargestellten bevorzugten Ausführungsform ist die Transitionszone 503 als ein Kreis oder eine Sphäre mit einem Radius r 502 um den Übergangspunkt bzw. Übergangsanker 501 als Mittelpunkt des Kreises bzw. der Sphäre festgelegt. Es kann auch nur ein Halbkreis oder Kreissegment festgelegt werden, insbesondere wenn der Übergangspunkt 501 an einer Eingangstür zu einem Gebäude definiert wird. Der Radius r 502 der Transitionszone 503 kann theoretisch beliebig festgelegt werden. Typischerweise wird ein Wert gewählt, der den Nutzer unter Berücksichtigung der Umgebung rechtzeitig in die Navigation per Cloud-Raumanker überführt. Der Wert kann je nach Navigationsumgebung und Art des Übergangspunktes 501 wenige Meter oder auch ein oder mehrere Dutzend Meter betragen. Bei einem Eingang in ein Gebäude kann der Radius r typischerweise z.B. etwa 10 Meter betragen, während bei einem großen öffentlichen Platz, der bspw. verschiedene ansteuerbare Ziele umfassen soll, der Radius r auch z.B. 100 oder sogar mehr Meter betragen kann.

Um eine Navigation mittels Cloud-Raumanker zu ermöglichen, werden Cloud-Raumanker 201 an beliebigen Orten platziert, und es wird auch ein Graph 505 der Cloud-Raumanker 201 außerhalb der Transitionszone 503 mit der im Zusammenhang mit Figur 2 beschriebenen Methode aufgebaut.

Wird ein Benutzer von einem beliebigen Startpunkt 506 mittels GNSS zu dem Übergangsanker 501 entlang des Weges 507 navigiert, betritt er bei Erreichen des durch den Radius r 502 festgelegten Kreises die Transitionszone 503. Dies wird durch die Anwendung, z.B. die bereits im Hintergrund des mobilen Endgerätes (408) laufende Benutzer-Applikation 406, erfasst, die daraufhin unmittelbar die Navigation mittels Cloud-Raumanker 201 initiiert. Hierzu schaltet z.B. die Benutzer-Applikation 406 oder dgl. bspw. automatisch die Kamera 411 des Endgerätes 408 zur Erfassung der Umgebung ein, sofern diese noch nicht eingeschaltet ist.

Anschließend sucht z.B. die Benutzer-Applikation 406 in Zusammenarbeit mit dem Cloud-Raumankerdienst 402 nach bereits platzierten Cloud-Raumankern. Außerdem platziert sie entlang des Laufweges des Benutzers in einem bestimmten Abstand, vorzugsweise in einem Abstand von 1-3 Metern, z.B. 1 Meter, automatisch weitere Cloud-Raumanker. Es versteht sich, dass der Abstand von 1 Meter hier zwar bevorzugt, aber nur beispielhaft ist und je nach Erfordernis auch mehr oder weniger als 1 Meter betragen kann. Grundsätzlich ist hier die Datenmenge (abhängig von der Anzahl der Cloud-Raumanker) gegenüber der Reaktionsfähigkeit der Navigation (abhängig von der Anzahl der Cloud-Raumanker im Sichtfeld der Kamera) abzuwägen. Sofern davon ausgegangen wird, dass mit einem mobilen Endgerät aus ca. 1 Meter Höhe in einem Winkel von 45° auf den Boden gezeigt wird, ist ein 1 Meter Abstand von Cloud-Raumankern eng genug, um immer mindestens einen Cloud-Raumanker im Sichtbereich der Kamera zu enthalten.

Ferner werden zwischen den platzierten Cloud-Raumankern 201 automatisch bidirektionale Verbindungen 202 aufgebaut. Sowohl die Cloud-Raumanker 201 als auch die Beziehungen bzw. Verbindungen zwischen diesen werden nach dem oben beschriebenen Verfahren erstellt, zu dem Cloud-Raumanker-Dienst 402 und/oder dem Webserver 404 gesandt und gespeichert.

Sobald die Anwendung den Übergangsanker 501 oder einen bereits gesetzten Cloud-Raumanker 201 innerhalb des Auffangnetzes oder Graphen 504 detektiert, wird das automatische Platzieren von Cloud-Raumankern gestoppt. Es werden von der Anwendung keine weiteren Cloud-Raumanker mehr gesetzt. Vielmehr wird zu diesem Zeitpunkt die Navigation nach dem oben beschriebenen Prinzip innerhalb des erzeugten Graphen 504 gestartet. Der Benutzer hat nun bspw. die Möglichkeit, sich anhand des in Figur 3 dargestellten Verfahrens mittels Cloud-Raumanker 201 innerhalb eines Gebäudes (oder auch im Freien) entlang des Graphen 504 innerhalb der Transitionszone 503 und ggfs. entlang des Graphen 505 außerhalb der Transitionszone 503 zu einem gewünschten Ort navigieren zu lassen.

Wenn ein Benutzer durch das mit Cloud-Raumankern 201 erzeugte Auffangnetz oder den Graphen 504 innerhalb der Transitionszone 503 navigiert wird, jedoch ein GNSS-Ziel außerhalb der Transitionszone 503 ausgewählt hat, wird er aus dem Auffangnetz oder Graphen 504 heraus navigiert, so dass er die Transitionszone 503 mit dem Radius r 502 verlässt. Dies wird durch die Benutzer-Applikation 406 erkannt, woraufhin automatisch erneut zu einer Navigation mittels GNSS gewechselt wird.

Vorteilhafterweise ermöglichen das Verfahren 500 und das System 400 gemäß der vorliegenden Erfindung eine Navigation sowohl außerhalb als auch innerhalb von Gebäuden sowie einen fließenden Übergang zwischen den beiden Navigationsarten. Der Benutzer kann außerhalb des Gebäudes die Navigation mittels GNSS wählen, um sich bequem durch die Umgebung im Freien navigieren zu lassen. Sobald er die Transitionszone 503 erreicht bzw. betritt, wird automatisch zu dem Navigationsmodus auf Basis von Cloud-Raumankern umgeschaltet, und der Benutzer mittels Cloud-Raumanker durch die Transitionszone 503 und innerhalb des Gebäudes, in dem GNSS-Positionssignale ggfs. nicht oder nicht mit hinreichender Qualität zur Verfügung stehen können, navigiert. Sobald der Benutzer das Gebäude und die Transitionszone 503 wieder verlässt, wird automatisch wieder zur Navigation mittels GNSS gewechselt.

Das Verfahren 500 und das System 400 können in gleicher Weise zur wahlweisen Navigation im Freien mittels GNSS und mittels Cloud-Raumanker verwendet werden, wobei dann die Transitionszone 503 den Bereich im Freien vorgibt, in dem ein Wechsel zwischen den beiden Navigationsarten erfolgen soll.

Da das Auffangnetz oder der Graph 504 durch die automatische Platzierung der Cloud-Raumanker 201 schnell mit Cloud-Raumankern befüllt wird und insbesondere dann, wenn die Transitionszone 503 häufig betreten wird, ins Unermessliche wachsen könnte, umfasst die vorliegende Erfindung in einer bevorzugten Ausführungsform ferner eine Prozedur zur Begrenzung der Anzahl der Cloud-Raumanker und/oder zum kontinuierlichen Erneuern der Cloud-Raumanker 201.

Bspw. können in einer Weiterbildung des erfindungsgemäßen Verfahrens 500 und Systems 400 abhängig davon, wie groß die Distanz innerhalb der Transitionszone 503 zwischen bestehenden Cloud-Raumankern und automatisch gesetzten Cloud-Raumankern ist, die zuletzt gesetzten Cloud-Raumanker entweder gespeichert oder verworfen werden. Die Distanz wird dabei so gewählt, dass das Auffangnetz 504 nicht zu eng- bzw. grobmaschig wird. Es kann eine Mindestdistanz, eine Maximaldistanz oder beide vorgegeben werden. Wichtig ist, dass im Sichtfeld der Kamera immer mindestens ein Cloud-Raumanker vorhanden ist. Bei einer Höhe der Kamera von 1 Meter und einem Blickwinkel von 45° ist das bei einer Distanz von 1 Meter von Cloud-Raumankern immer gegeben. Die Distanz kann z.B. etwa 1-3 Meter betragen.

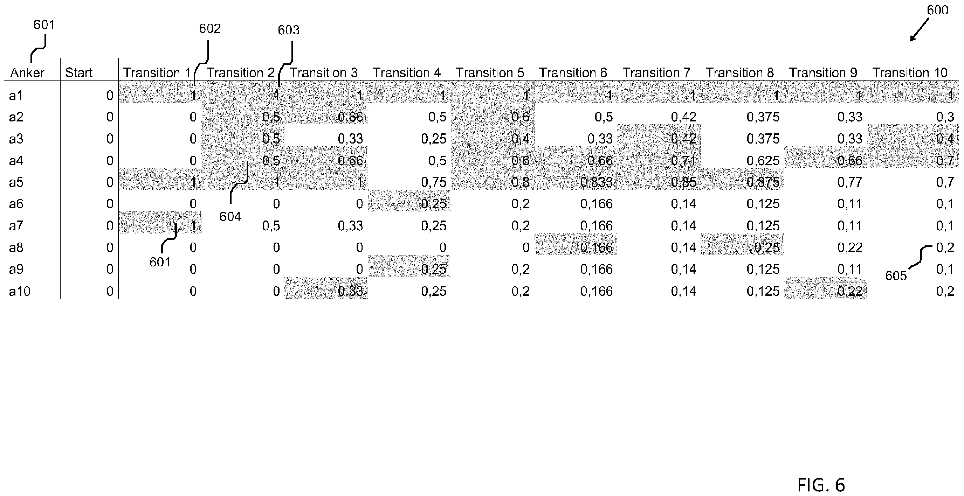

Wird eine bestimmte Anzahl an Cloud-Raumankern innerhalb des Radius r der Transitionszone 503 erreicht, können bspw. in einer zusätzlichen oder alternativen Weiterbildung des erfindungsgemäßen Verfahrens 500 und Systems 400 anhand der nachstehend in Verbindung mit Figur 6 näher erläuterten Detektionsrate selten detektierte Cloud-Raumanker wieder gelöscht werden.

Figur 6 zeigt in einer Tabelle 600 den Verlauf der Detektionsraten anhand von beispielhaften zehn Übergängen bzw. Transitionen von einer Navigation mittels GNSS zu einer Navigation mittels Cloud-Raumanker. In der Tabelle 600 wird der Klarheit und Knappheit der Darstellung wegen der Begriff "Anker" für die Bezeichnung der Cloud-Raumanker verwendet.

Die Detektionsrate wird berechnet, indem die Anzahl der Detektionen pro Cloud-Raumanker durch die Anzahl an Transitionen, also an Übergängen von der Navigation mittels GNSS zur Navigation mittels Cloud-Raumanker, geteilt wird. Auf diese Weise verändert sich die Detektionsrate bei jeder Transition, wodurch Cloud-Raumanker mit einer hohen bzw. niedrigen Detektionsrate identifiziert und entsprechend gespeichert oder verworfen werden können.

Werden bspw. von einem Benutzer in einer ersten Transition (vgl. Spalte "Transition 1") drei Cloud-Raumanker, bspw. die Raumanker a1, a5 und a7, platziert, gelten diese entsprechend auch als detektiert. In der Tabelle 600 ist dies an den grau unterlegten Zellen 601 zu erkennen. Da somit ein Übergang bzw. eine Transition stattgefunden hat, erhalten die drei platzierten Cloud-Raumanker a1, a5 und a7 eine Detektionsrate von 1, wie beispielhaft für den Cloud-Raumanker a1 durch das Bezugszeichen 602 angezeigt.

Werden bei einem weiteren Übergang von demselben oder einem anderen Benutzer erneut drei Cloud-Raumanker platziert, wird die Detektionsrate erneut berechnet und entsprechend angepasst. So verfügen in dem dargestellten Beispiel nach Figur 6 die Cloud-Raumanker a1 und a5, die sowohl beim ersten Übergang (Transition 1) als auch beim zweiten Übergang (Transition 2) detektiert wurden, nach wie vor über eine Detektionsrate von 1, wie durch das Bezugszeichen 603 beispielhaft angezeigt. Hingegen verfügen die Cloud-Raumanker a2, a3, a4 und a7, die nur einmal, entweder beim ersten oder beim zweiten Übergang detektiert wurden, über eine Detektionsrate von 0,5, wie durch das Bezugszeichen 604 beispielhaft angezeigt. Die restlichen Cloud-Raumanker verfügen über eine Detektionsrate von 0.

Entsprechend wird die Detektionsrate bei jedem weiteren Übergang (Transitionen 3-10) stets aktuell berechnet und entsprechend angepasst. Bspw. verfügen die Cloud-Raumanker a1-a10 nach dem dritten Übergang (Transition 3) über eine Detektionsrate von 1, 0,66, 0,33 oder 0, je nachdem ob sie drei Mal, zwei Mal, ein Mal oder kein Mal platziert wurden, unabhängig davon, ob sie beim letzten oder einem früheren Übergang platziert wurden.

Wenn bspw. 10 Transitionen durchgeführt werden, bei denen insgesamt 10 Cloud-Raumanker platziert wurden, beträgt die Detektionsrate des Cloud-Raumankers a8 in dem dargestellten Beispiel 0,2, wie mit dem Bezugszeichen 605 angezeigt. Dies liegt daran, dass der Cloud-Raumanker a8 im Verlauf der 10 Transitionen zweimal detektiert worden ist. Die Detektionsraten für die anderen Cloud-Raumanker a1-a7 und a9-a10 werden entsprechend berechnet.

Nach dem Erfassen der zehn Transitionen können bspw. der oder die Cloud-Raumanker mit der niedrigsten Detektionsrate automatisiert aus der Transitionszone 503 entfernt werden, so dass neue Cloud-Raumanker innerhalb der gewünschten Anzahl von Cloud-Raumankern in der Transitionszone 503 platziert werden können. Die Prozedur zum Entfernen von Cloud-Raumankern in Abhängigkeit von der Detektionsrate dient als Grundlage einer automatischen Erneuerung der Cloud-Raumanker, so dass diese sich kontinuierlich an Benutzerverhalten und Veränderungen in der Umgebung anpassen können.

Es ist verständlich, dass die Anzahl von 10 Transitionen in dem Beispiel nach Figur 6 rein exemplarisch ist und dass eine beliebige Anzahl von Transitionen vorgegeben werden kann, nach der Cloud-Raumanker mit der niedrigsten Detektionsrate automatisiert entfernt werden können. Die Cloud-Raumanker könnten auch nach jeder Transition unter Berücksichtigung einer Anzahl N letzter Transitionen entfernt werden. Die Detektionsraten könnten auch in Abhängigkeit von der Aktualität der Transition gewichtet werden, so dass Detektionen innerhalb der letzten Transitionen stärker gewichtet werden als Detektionen von weiter zurückliegenden Transitionen.

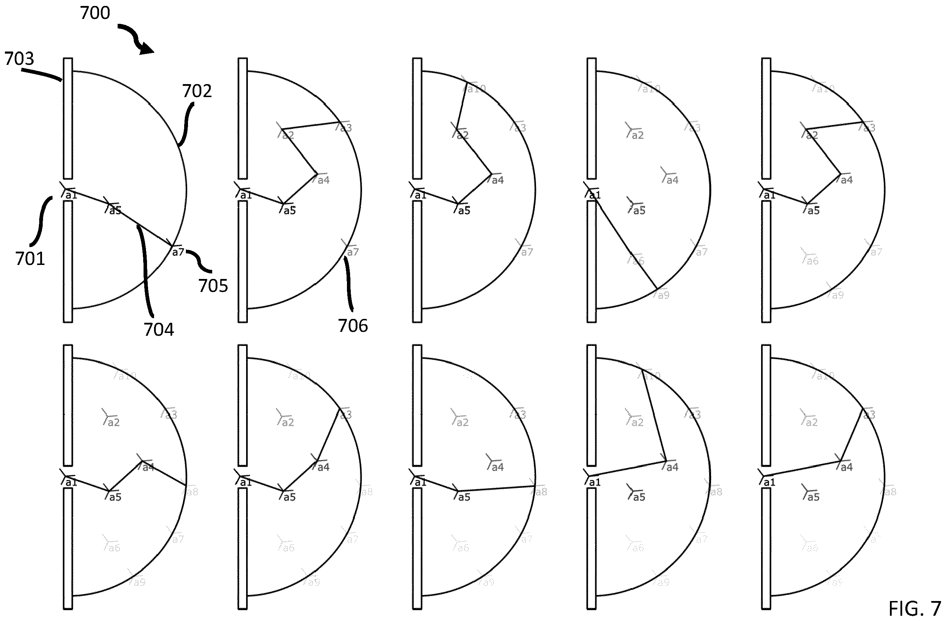

Bezugnehmend auf Figur 7 ist dort der Verlauf der Detektionsrate anhand eines schematischen Diagramms 700 veranschaulicht. Das Diagramm 700 ist von links nach rechts beginnend in der oberen Zeile und fortfahrend in der unteren Zeile der Figur 7 zu lesen und steht in direktem Zusammenhang mit der in Figur 6 dargestellten Tabelle 600.

In Figur 7 stellt das Bezugszeichen 701 den Übergangsanker dar, während das Bezugszeichen 702 die Transitionszone kennzeichnet. Das Bezugszeichen 703 veranschaulicht bspw. die Au-βenwand eines Gebäudes mit einem Eingang bei dem Übergangsanker 701. Es sind auch der Laufweg 704 des Benutzers innerhalb der Transitionszone 702, die bidirektionale Verbindung 704 zwischen den Cloud-Raumankern entlang des Laufwegs sowie die platzierten Cloud-Raumanker 705 selbst veranschaulicht.

Im Verlauf der Transitionen "verblassen" die platzierten Cloud-Raumanker 705 in Abhängigkeit von den in Figur 6 aufgezeigten Detektionsraten. Dies ist bspw. in Figur 7 bei der zweiten Transition mit dem Bezugszeichen 706 angezeigt. Die am meisten "verblassten" Cloud-Raumanker 705, die bspw. nach den zehn Transitionen die geringste Detektionsrate aufweisen, hier z.B. die Cloud-Raumanker a6, a7 und a9, können verworfen bzw. gelöscht werden. Auf diese Weise werden die Cloud-Raumanker fortdauernd automatisch erneuert und an Benutzerverhalten und/oder sich ändernde Umgebungsverhältnisse angepasst, so dass eine zuverlässige Navigation mittels Cloud-Raumanker auch in wechselhaften Umgebungen ermöglicht wird.

Es sind ein Verfahren und System zur Ermöglichung einer Navigation unter Verwendung eines globalen Navigationssatellitensystems (GNSS) und Cloud-Raumanker beschrieben. Das Verfahren und System sind eingerichtet, um ein mobiles Benutzer-Endgerät 408 mittels GNSS zu einem festgelegten Ziel zu navigieren, zu überwachen, ob das mobile Benutzer-Endgerät 408 in eine vordefinierte Transitionszone 503, 702 eintritt, die um einen vordefinierten auswählbaren Übergangspunkt 501, 701 festgelegt ist, und bei Erkennung, dass das mobile Benutzer-Endgerät 408 in die vordefinierte Transitionszone 503, 702 eintritt, eine Navigation des mobilen Benutzer-Endgerätes 408 zu dem Ziel mittels Cloud-Raumanker 201, 705 zu initiieren. Das Verfahren und System ermöglichen einen fließenden Übergang zwischen der Navigation mittels GNSS und der Navigation mittels Cloud-Raumanker. Das Verfahren und System können ferner die Erstellung eines Graphen 504 anhand von bidirektionalen Verbindungen 202, 204 zwischen Cloud-Raumankern 201, 705 zur Navigation entlang des kürzesten Pfades und eine Prozedur zur automatischen Erneuerung von Cloud-Raumankern umfassen, um eine zuverlässige Navigation mittels Cloud-Raumanker auch in wechselhaften Umgebungen, auch im Freien, zu ermöglichen.

## Patentansprüche

1. Verfahren zur Ermöglichung einer Navigation unter Verwendung eines globalen Navigationssatellitensystems (GNSS) und Cloud-Raumanker, wobei das Verfahren aufweist:
Navigieren eines mobilen Benutzer-Endgerätes (408) mittels GNSS;
Überwachen, ob das mobile Benutzer-Endgerät (408) in eine vordefinierte Transitionszone (503, 702) eintritt, die um einen vordefinierten Übergangspunkt (501, 701) festgelegt ist, und
bei Erkennung, dass das mobile Benutzer-Endgerät (40) in die vordefinierte Transitionszone (503, 702) eintritt, Initiieren einer Navigation des mobilen Benutzer-Endgerätes (408) mittels Cloud-Raumanker.

2. Verfahren nach Anspruch 1, wobei der Übergangspunkt (501, 701) ein platzierter Cloud-Raumankerpunkt ist, für den die entsprechenden GNNS-Koordinaten bekannt sind, und die Transitionszone (503, 702) als ein Bereich um den Übergangspunkt (501, 701) als Zentrum, vorzugsweise ein Kreis oder eine Sphäre mit einem von Null verschiedenen Radius (502) um den Übergangspunkt (501, 701) als Mittelpunkt vordefiniert wird.

3. Verfahren nach Anspruch 1 oder 2, wobei das Initiieren der Navigation mittels Cloud-Raumanker ein automatisches Einschalten einer Kamera (411) des mobilen Benutzer-Endgerätes (408), Aufzeichnen der Umgebung des mobilen Benutzer-Endgerätes (408) mit der Kamera (411), Detektieren von Cloud-Raumankern (201, 705) durch Identifikation markanter Stellen der Umgebung und automatisches Platzieren der detektierten Cloud-Raumanker (201, 705) aufweist.

4. Verfahren nach Anspruch 3, wobei bei der Platzierung der Cloud-Raumankern (201, 705) bidirektionale Verbindungen (204) zwischen den Cloud-Raumankern (201, 705) erstellt werden und auf der Basis der platzierten Cloud-Raumanker (201, 705) und der bidirektionalen Verbindungen (204) zwischen diesen ein netzartiger Graph (504, 505) wenigstens innerhalb der Transitionszone (503, 702) aufgebaut wird, der die anfängliche Navigation mittels Cloud-Raumanker (201, 705) ermöglicht.

5. Verfahren nach Anspruch 3 oder 4, wobei die automatische Platzierung der Cloud-Raumanker (201, 705) unterbrochen und die Navigation mittels Cloud-Raumanker (201, 705) begonnen wird, sobald innerhalb des netzartigen Graphen (504, 505) ein Cloud-Raumanker (201, 705) oder der Übergangsanker (501, 701) detektiert bzw. lokalisiert wird.

6. Verfahren nach Anspruch 5, wobei die Navigation mittels Cloud-Raumanker auf der Basis des netzartigen Graphen (504, 505) unter Anwendung eines Algorithmus zur Berechnung des kürzesten Pfades innerhalb des Graphen (504, 505) erfolgt.

7. Verfahren nach einem der Anspruch 4, wobei beim Erstellen der bidirektionalen Verbindungen (202, 204) zwischen Cloud-Raumankern (201, 705) überprüft wird, ob zwischen den detektierten Cloud-Raumankern (201, 705) bereits eine bidirektionale Verbindung (202, 204) besteht und diese bei Nichtvorhandensein erstellt wird.

8. Verfahren nach einem beliebigen der vorhergehenden Ansprüche, das ferner eine Prozedur zum automatischen Erneuern von Cloud-Raumankern (201, 705) durch automatisches Platzieren von neuen Cloud-Raumankern (201, 705) umfasst, sobald die Transitionszone (503, 702) aus einer Navigation mittels GNSS heraus betreten wird.

9. Verfahren nach Anspruch 8, wobei die Prozedur zum automatischen Erneuern von Cloud-Raumankern (201, 705) ein automatisches Herstellen von bidirektionalen Verbindungen (202, 204) zwischen den automatisch neu platzierten Cloud-Raumankern (201, 705) innerhalb der Transitionszone (503, 702) umfasst.

10. Verfahren nach Anspruch 8 oder 9, wobei die Prozedur zum automatischen Erneuern von Cloud-Raumankern (201, 705) ein Beenden des automatischen Platzierens von Cloud-Raumankern umfasst, sobald ein Cloud-Raumanker (201, 705) detektiert bzw. lokalisiert wurde.

11. Verfahren nach Anspruch 10, wobei die Prozedur zum automatischen Erneuern von Cloud-Raumankern (201, 705) eine Bestimmung umfasst, ob eine Distanz zwischen dem zuletzt platzierten Cloud-Raumanker (201, 705) und dem detektierten Cloud-Raumanker kleiner ist als ein definierter Mindestwert, wobei in diesem Fall der zuletzt platzierte Cloud-Raumanker (201, 705) gelöscht bzw. verworfen wird.

12. Verfahren nach einem der Ansprüche 8-11, wobei die Prozedur zum automatischen Erneuern von Cloud-Raumankern (201, 705) ein Bestimmen einer Detektionsrate (601-605) für die platzierten Cloud-Raumanker (201, 705) umfasst, die in Abhängigkeit von der Anzahl von Detektionen der Cloud-Raumanker (201, 705) und der Anzahl von Übergängen von einer Navigation mittels GNSS in eine Navigation mittels Cloud-Raumanker, die durch Betreten der Transitionszone (503, 702) erfolgten, berechnet wird.

13. Verfahren nach Anspruch 12, das ferner ein automatisches Löschen von Cloud-Raumankern (201, 705) innerhalb der Transitionszone (503, 705) in Abhängigkeit von den ermittelten Detektionsraten (601-605) aufweist.

14. System zur Ermöglichung einer Navigation unter Verwendung eines globalen Navigationssatellitensystems (GNSS) und Cloud-Raumanker, wobei das System aufweist:
wenigstens ein mobiles Benutzer-Endgerät (407, 408), das eine Kamera (411) zum Aufzeichnen von räumlichen Daten von der Umgebung, einen Prozessor (412), einen Speicher (413) zur Speicherung von durch den Prozessor (412) ausführbaren Instruktionen, einen GNSS-Empfänger (409) zum Empfangen von Satellitenpositionssignalen von einem globalen Navigationssatellitensystem, eine Eingabe- und Ausgabeeinrichtung (415) und eine Kommunikationseinrichtung (416) zur Kommunikation mit entfernten Computern (402, 404) über ein Netzwerk (403) aufweist;
wobei die Instruktionen, wenn sie durch den Prozessor (412) ausgeführt werden, den Prozessor (412) veranlassen, ein Verfahren nach einem beliebigen der vorhergehenden Ansprüche durchzuführen.

15. System nach Anspruch 14, das eine auf einem von dem wenigstens einen mobilen Benutzer-Endgerät (407, 408) implementierte Administrator-Applikation (401) aufweist, die eingerichtet ist, um:
anhand der von der Kamera (411) aufgezeichneten Daten markante Stellen einer aufgezeichneten Umgebung zu erkennen und diese als Umgebungsinformationen zusammenzufassen;
einem Benutzer die aufgezeichnete Umgebung anzuzeigen;
dem Benutzer zu ermöglichen, Raumanker (201, 705) in der angezeigten aufgezeichneten Umgebung zu setzen, einen Übergangsanker (501, 701) und Parameter zur Definition der Transitionszone (503, 702) zu definieren;
bidirektionale Verbindungen (202, 204) zwischen Raumankern (201, 705 herzustellen; und
Daten, die den gesetzten Raumanker mit wenigstens einem Teil der zusammengefassten Umgebungsinformationen, die hergestellten bidirektionalen Verbindungen (202, 204), den Übergangsanker (501, 701) und die Parameter zur Definition der Transitionszone (503, 702) betreffen, über die Kommunikationseinrichtung (416) zu einem entfernten Computer (402, 404) eines Cloud-Raumanker-Dienstes (402) zu senden, damit sie darin gespeichert werden.

16. System nach Anspruch 15, das eine auf einem von dem wenigstens einen mobilen Benutzer-Endgerät (407, 408) implementierte Benutzer-Applikation (406) aufweist, die eingerichtet ist, um:
ein Betreten der Transitionszone (503, 702) durch das wenigstens eine mobile Benutzer-Endgerät (407, 408) zu erkennen und die Kamera (411) des einen von dem wenigstens einen mobilen Benutzer-Endgerät (407, 408) einzuschalten oder eingeschaltet zu lassen;
anhand von der Kamera (411) aufgezeichneter Daten markante Stellen einer aufgezeichneten Umgebung zu erkennen und diese in neu erstellten Umgebungsinformationen zusammenzufassen;
Daten, die die neu erstellten Umgebungsinformationen betreffen, über die Kommunikationseinrichtung (416) zu dem entfernten Computer (402, 404) des Cloud-Raumanker-Dienstes (402) zu senden, damit sie darin mit gespeicherten Daten verglichen werden, um Cloud-Raumanker (201, 705) zu lokalisieren;
lokalisierte Cloud-Raumanker (201, 705) und zugehörige Informationen von dem entfernten Computer (402, 404) des Cloud-Raumanker-Dienstes zu empfangen;
einem Benutzer die aufgezeichnete Umgebung mitsamt der lokalisierten Cloud-Raumanker (201, 705) anzuzeigen;
dem Benutzer zu ermöglichen, Weg- und Zielpunkte zu setzen;
einen Graphen (504) mit platzierten Cloud-Raumankern (201, 705) in der Transitionszone (503, 702) zu erstellen;
den Benutzer unter Verwendung der lokalisierten Cloud-Raumanker (201, 705) innerhalb des erstellten Graphen (504) durch die Transitionszone (503, 702) in Richtung des gesetzten Weg- oder Zielpunktes zu führen; und
entlang des Navigationsweges automatisch weitere Cloud-Raumanker (201, 705) zu platzieren und bidirektionale Verbindungen (202, 204) zwischen den platzierten und lokalisierten Cloud-Raumankern (201, 705) herzustellen.
